(19) Europäisches Patentamt
European Patent Office
Office européen des brevets

(11) EP 4 657 807 A1

(12) EUROPEAN PATENT APPLICATION
published in accordance with Art. 153(4) EPC

(43) Date of publication:
03.12.2025 Bulletin 2025/49

(51) International Patent Classification (IPC):
H04L 27/26 (2006.01)      H04B 7/0452 (2017.01)

(21) Application number: 23918364.3

(52) Cooperative Patent Classification (CPC):
H04B 7/0452; H04L 27/26

(22) Date of filing: 25.01.2023

(86) International application number:
PCT/JP2023/002312

(87) International publication number:
WO 2024/157399 (02.08.2024 Gazette 2024/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: NTT DOCOMO, INC.
Tokyo 100-6150 (JP)

(72) Inventors:
• MATSUMURA, Yuki
Tokyo 100-6150 (JP)
• NAGATA, Satoshi
Tokyo 100-6150 (JP)

(74) Representative: Hoffmann Eitle
Patent- und Rechtsanwälte PartmbB
Arabellastraße 30
81925 München (DE)

(54) **TERMINAL, WIRELESS COMMUNICATION METHOD, AND BASE STATION**

(57) A terminal according to an aspect of the present disclosure includes: a receiving section that receives, when combinations of category-1 demodulation reference signal (DMRS) ports and category-2 DMRS ports in at least one code division multiplexing (CDM) group are supported, downlink control information (DCI) that indicates the combinations and that schedules a shared channel for one or two codewords; and a control section that controls, based on the combinations, transmission or reception of the shared channel, wherein the combinations further include a combination of category-3 DMRS ports and include an entry indicating at least one of DMRS ports across the CDM groups and DMRS ports corresponding to a plurality of transmission/reception points. An aspect of the present disclosure enables communication to be appropriately controlled even when the number of DMRS ports is increased as compared with any existing radio communication system.

dmrs-Type=eType1, maxLength=1

| | One Codeword:<br>Codeword 0 enabled,<br>Codeword 1 disabled | | | Two Codewords:<br>Codeword 0 enabled,<br>Codeword 1 enabled | | | |
|---|---|---|---|---|---|---|---|
| Value | Number of DMRS CDM group(s) without data | DMRS port(s) | Notes | Value | Number of DMRS CDM group(s) without data | DMRS port(s) | Notes |
| 0 | [1] | [0] | | [0] | [2] | [0,1,2,3,8] | [Rank 5-8 with one DMRS symbol] |
| 1 | [1] | [1] | | [1] | [2] | [0,1,2,3,8,10] | |
| 2 | [1] | [0,1] | | [2] | [2] | [0,1,2,3,8,9,10] | |
| 3 | 2 | 0 | | [3] | [2] | [0,1,2,3,8,9,10,11] | |
| 4 | 2 | 1 | | | | | |
| 5 | 2 | 2 | | | | | |
| 6 | 2 | 3 | Cat. 1 | | | | |
| 7 | 2 | 0,1 | | | | | |
| 8 | 2 | 2,3 | | | | | |
| 9 | [2] | [0-2] | | | | | |
| 10 | [2] | [0-3] | | | | | |
| 11 | [2] | [0,2] | | | | | |
| 12 | [1] | [8] | | | | | |
| 13 | [1] | [9] | | | | | |
| 14 | [1] | [8,9] | | | | | |
| 15 | 2 | 8 | | | | | |
| 16 | 2 | 9 | | | | | |
| 17 | 2 | 10 | | | | | |
| 18 | 2 | 11 | Cat.2 | | | | |
| 19 | 2 | 8,9 | | | | | |
| 20 | 2 | 10,11 | | | | | |
| 21 | [2] | [8-10] | | | | | |
| 22 | [2] | [8-11] | | | | | |
| 23 | [2] | [8, 10],<br>[9, 11] | | | | | |
| 24 | [1] | [0,1,8] | | | | | |
| 25 | [1] | [0,1,8,9] | | | | | |
| 26 | 2 | 0,1,8 | Cat.3 | | | | |
| 27 | 2 | 0,1,8,9 | | | | | |
| 28 | 2 | 2,3,10 | | | | | |
| 29 | 2 | 2,3,10,11 | | | | | |

FIG. 5

EP 4 657 807 A1

## Description

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (for example, Rel-18 NR), it is under study to increase the number of demodulation reference signal (DMRS) ports. Such a new DMRS port different from an existing DMRS port (also referred to as a Rel-15 DMRS port) is also referred to as a Rel-18 DMRS port.

Meanwhile, for a case where Rel-18 DMRS ports with the number of DMRS ports increased are introduced, studies have not sufficiently been made on a difference from Rel-15 DMRS ports in the indication, an antenna port table to be referred to, and the like. Unless these are clearly defined, no suitable improvement in communication throughput/communication quality may be provided.

In view of this, the present disclosure has one object to provide a terminal, a radio communication method, and a base station that enable communication to be appropriately controlled even when the number of DMRS ports is increased as compared with any existing radio communication system.

Solution to Problem

A terminal according to an aspect of the present disclosure includes: a receiving section that receives, when combinations of category-1 demodulation reference signal (DMRS) ports and category-2 DMRS ports in at least one code division multiplexing (CDM) group are supported, downlink control information (DCI) that indicates the combinations and that schedules a shared channel for one or two codewords; and a control section that controls, based on the combinations, transmission or reception of the shared channel, wherein the combinations further include a combination of category-3 DMRS ports and include an entry indicating at least one of DMRS ports across the CDM groups and DMRS ports corresponding to a plurality of transmission/reception points.

Advantageous Effects of Invention

An aspect of the present disclosure enables communication to be appropriately controlled even when the number of DMRS ports is increased as compared with any existing radio communication system.

Brief Description of Drawings

[FIG. 1] FIG. 1 shows an example of an existing DMRS port table for PDSCH DMRS configuration type 1/2.

[FIG. 2] FIG. 2 shows an example of an existing DMRS port table for PUSCH DMRS configuration type 1/2.

[FIG. 3] FIGS. 3A to 3C are each a diagram to show an example of new OCCs (Orthogonal Cover Codes).

[FIG. 4] FIGS. 4A and 4B are each a diagram to show an example of association between CDM groups, DMRS ports, and OCCs, in enhanced type 1/enhanced type 2.

[FIG. 5] FIG. 5 shows an example of an antenna port table in a case of DMRS type = enhanced type 1 and maximum DMRS length = 1.

[FIG. 6] FIGS. 6A to 6C each show a variation of the antenna port table in the case of DMRS type = enhanced type 1 and maximum DMRS length = 1.

[FIG. 7] FIG. 7 shows another example of the antenna port table in the case of DMRS type = enhanced type 1 and maximum DMRS length = 1.

[FIG. 8] FIG. 8 shows an example of an antenna port table in a case of DMRS type = enhanced type 1 and maximum DMRS length = 2.

[FIG. 9] FIG. 9 shows an example of an antenna port table in the case of DMRS type = enhanced type 1 and maximum DMRS length = 2.

[FIG. 10] FIGS. 10A and 10B each show a variation of the antenna port table in the case of DMRS type = enhanced type 1 and maximum DMRS length = 2.

[FIG. 11] FIG. 11 shows another example of an antenna port table in a case of DMRS type = enhanced type 2 and maximum DMRS length = 1.

[FIG. 12] FIG. 12 shows another example of the antenna port table in the case of DMRS type = enhanced type 2 and maximum DMRS length = 1.

[FIG. 13] FIGS. 13A and 13B each show a variation of the antenna port table in the case of DMRS type = enhanced type 2 and maximum DMRS length = 1.

[FIG. 14] FIG. 14 shows another example of an antenna port table in a case of DMRS type = enhanced type 2 and maximum DMRS length = 2.

[FIG. 15] FIG. 15 shows another example of the antenna port table in the case of DMRS type = enhanced type 2 and maximum DMRS length = 2.

[FIG. 16] FIG. 16 shows another example of the antenna port table in the case of DMRS type = enhanced type 2 and maximum DMRS length = 2.

[FIG. 17] FIGS. 17A and 17B each show a variation of the antenna port table in the case of DMRS type = enhanced type 2 and maximum DMRS length = 2.

[FIG. 18] FIGS. 18A and 18B are each a diagram to show an example of association between CDM groups, DMRS ports between a plurality of UEs, and OCCs, for DMRS type = type 1/type 2.

[FIG. 19] FIGS. 19A and 19B are each a diagram to show an example of association between CDM groups, DMRS ports between a plurality of UEs, and OCCs, for DMRS type = enhanced type 1/enhanced type 2.

[FIG. 20] FIG. 20 shows a variation of the antenna port table in the case of DMRS type = enhanced type 1 and maximum DMRS length = 1.

[FIG. 21] FIG. 21 is a diagram to show an example of a schematic structure of a radio communication system according to one embodiment.

[FIG. 22] FIG. 22 is a diagram to show an example of a structure of a base station according to one embodiment.

[FIG. 23] FIG. 23 is a diagram to show an example of a structure of a user terminal according to one embodiment.

[FIG. 24] FIG. 24 is a diagram to show an example of a hardware structure of the base station and the user terminal according to one embodiment.

[FIG. 25] FIG. 25 is a diagram to show an example of a vehicle according to one embodiment.

Description of Embodiments

(DMRS)

A front-loaded demodulation reference signal (DMRS) is the first DMRS (DMRS in the first symbol or in a symbol near the first symbol) for faster demodulation. An additional DMRS can be configured by RRC, for a high speed moving terminal (user terminal, User Equipment (UE)) or a high modulation and coding scheme (MCS)/rank. A frequency location of the additional DMRS is the same as that of the front-loaded DMRS.

DMRS mapping type A or B is configured for a time domain. In DMRS mapping type A, DMRS location l_0 is counted by a symbol index in a slot. l_0 is configured by a parameter (dmrs-TypeA-Position) in an MIB or a common serving cell configuration (ServingCellConfigCommon). DMRS location 0 (reference point l) means the first symbol of the slot or each frequency hop. In DMRS mapping type B, DMRS location l_0 is counted by a symbol index in a PDSCH/PUSCH. l_0 is always 0. DMRS location 0 (reference point l) means the first symbol of the PDSCH/PUSCH or each frequency hop.

The DMRS location is defined by a table in a specification, and depends on duration of the PDSCH/PUSCH. The location of the additional DMRS is fixed.

(PDSCH/PUSCH) DMRS configuration type 1 or 2 is configured for a frequency domain. DMRS configuration type 1 includes a comb structure, and is applicable to both CP-OFDM (transport precoding=disabled) and DFT-S-OFDM (transport precoding=enabled). DMRS configuration type 2 is applicable to only CP-OFDM.

A single-symbol DMRS or a double-symbol DMRS is configured.

The single-symbol DMRS is normally used (is mandatory in Rel. 15). In the single-symbol DMRS, the number of additional DMRSs (symbols) is {0, 1, 2, 3}. The single-symbol DMRS supports both a case of enabled frequency hopping and a case of disabled frequency hopping. The single-symbol DMRS is used if a maximum number (maxLength) in uplink DMRS configuration (DMRS-UplinkConfig) is not configured.

The double-symbol DMRS is used for more DMRS ports (especially for Multi User Multi Input Multi Output (MU-MIMO)). In the double-symbol DMRS, the number of additional DMRSs (symbols) is {0, 1}. The double-symbol DMRS supports a case of disabled frequency hopping. If the maximum number (maxLength) in the uplink DMRS configuration (DMRS-UplinkConfig) is 2 (len2), which of the single-symbol DMRS or the double-symbol DMRS is to be used is determined by DCI or a configured grant.

Thus, as possible DMRS configuration patterns, the following combinations are conceivable.

- DMRS configuration type 1, DMRS mapping type A, single-symbol DMRS
- DMRS configuration type 1, DMRS mapping type A, double-symbol DMRS
- DMRS configuration type 1, DMRS mapping type B, single-symbol DMRS
- DMRS configuration type 1, DMRS mapping type B, double-symbol DMRS
- DMRS configuration type 2, DMRS mapping type A, single-symbol DMRS
- DMRS configuration type 2, DMRS mapping type A, double-symbol DMRS
- DMRS configuration type 2, DMRS mapping type B, single-symbol DMRS
- DMRS configuration type 2, DMRS mapping type B, double-symbol DMRS

A plurality of DMRS ports mapped to the same resource element (RE, time and frequency resources) are referred to as a DMRS code division multiplexing (CDM) group.

For DMRS configuration type 1 and the single-symbol DMRS, four DMRS ports can be used. In each DMRS CDM group, two DMRS ports are multiplexed by an FD OCC (Frequency Domain OCC) having a length of 2. Between a plurality of DMRS CDM groups (two DMRS CDM groups), two DMRS ports are multiplexed by frequency division multiplexing (FDM).

For DMRS configuration type 1 and the double-symbol DMRS, eight DMRS ports can be used. In each DMRS CDM group, two DMRS ports are multiplexed by an FD OCC having a length of 2, and two DMRS ports are multiplexed by a TD OCC (Time Domain OCC). In a plurality of DMRS CDM groups (two DMRS CDM groups), two DMRS ports are multiplexed by FDM.

For DMRS configuration type 2 and the single-symbol DMRS, six DMRS ports can be used. In each DMRS CDM group, two DMRS ports are multiplexed by an FD OCC having a length of 2. In a plurality of DMRS CDM groups (three DMRS CDM groups), three DMRS ports are multiplexed by FDM.

For DMRS configuration type 2 and the double-symbol DMRS, twelve DMRS ports can be used. In each DMRS CDM group, two DMRS ports are multiplexed by an FD OCC having a length of 2, and two DMRS ports are multiplexed by a TD OCC. In a plurality of DMRS CDM groups (three DMRS CDM groups), three DMRS ports are multiplexed by FDM.

An example of DMRS mapping type B is described here, but the same applies to DMRS mapping type A.

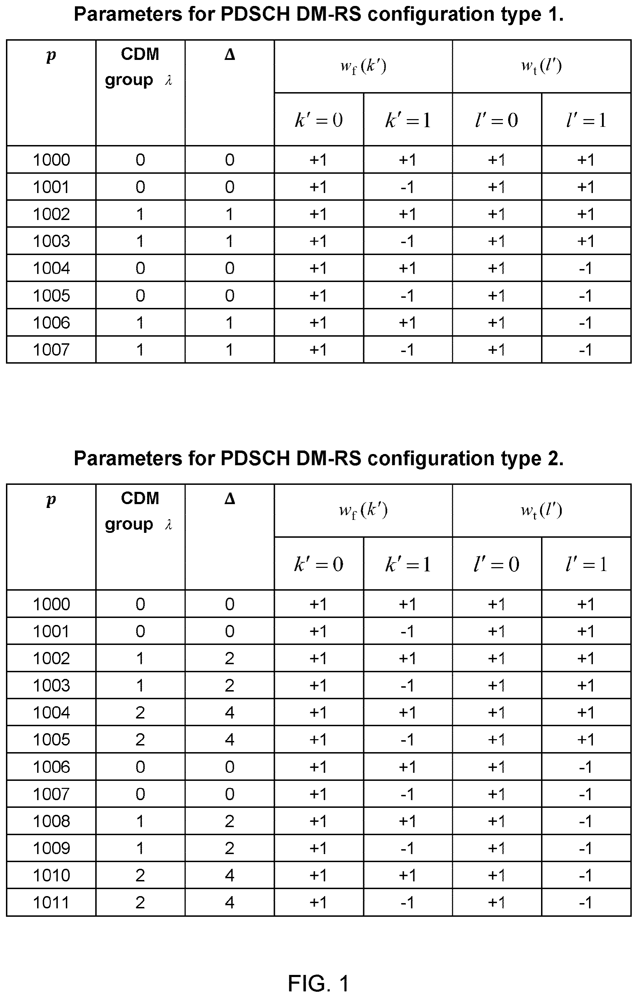

In parameters for a PDSCH DMRS (existing table, existing DMRS port table, FIG. 1), DMRS ports 1000 to 1007 and DMRS ports 1000 to 1011 can be used for DMRS configuration type 1 and DMRS configuration type 2, respectively.

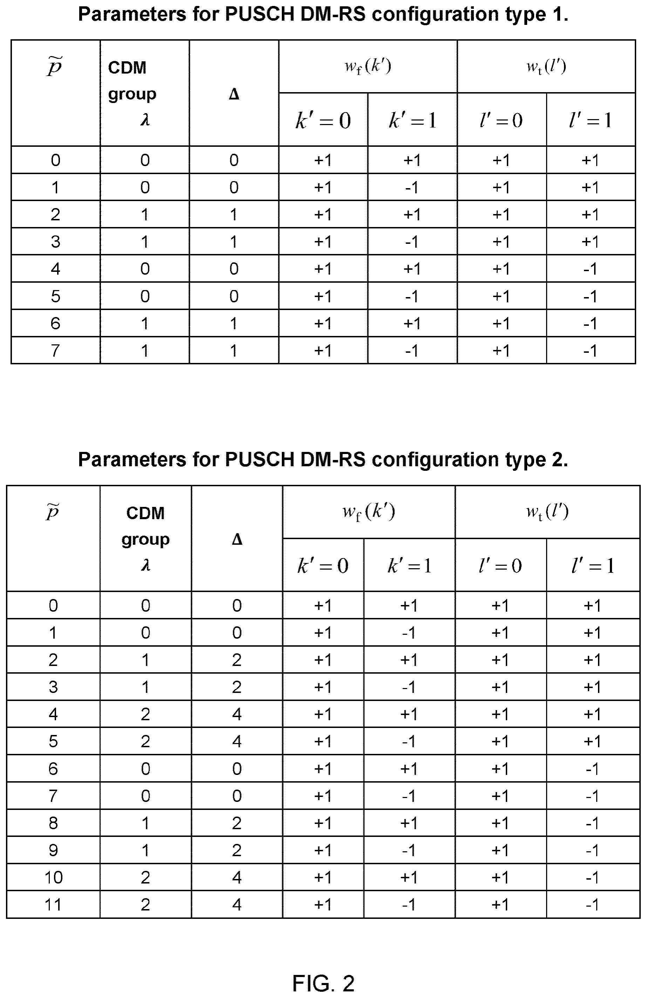

In parameters for a PUSCH DMRS (existing table, existing DMRS port table, FIG. 2), DMRS ports 0 to 7 and DMRS ports 0 to 11 can be used for DMRS configuration type 1 and DMRS configuration type 2, respectively.

(Reference Signal Port)

For orthogonalization of a MIMO layer, and the like, reference signals (for example, demodulation reference signals (DMRSs), CSI-RSs) with a plurality of ports are used.

For example, for single user MIMO (SU-MIMO), different DMRS ports/CSI-RS ports may be configured for each layer. For multi user MIMO (MU-MIMO), a DMRS port/CSI-RS port different per layer in one UE and per UE may be configured.

Note that it is expected that using the number of CSI-RS ports greater than the number of layers used for data enables more accurate channel state measurement based on this CSI-RS, thereby contributing to throughput enhancement.

In Rel-15 NR, for DMRSs with a plurality of ports, up to 8 ports and up to 12 ports are supported in a case of type 1 DMRSs (in other words, DMRS configuration type 1) and a case of type 2 DMRSs (in other words, DMRS configuration type 2), respectively, by using frequency division multiplexing (FDM), a frequency domain orthogonal cover code (FD-OCC), a time domain OCC (TD-OCC), and the like.

In Rel-15 NR, as the above-described FDM, a comb-shaped transmission frequency pattern (comb-shaped resource set) is used. As the above-described FD-OCC, a cyclic shift (CS) is used. The above-described TD-OCC can be applied only to the double-symbol

DMRS.

An OCC in the present disclosure may be interchangeably interpreted as an orthogonal code, orthogonalization, a cyclic shift, and the like.

Note that a DMRS type may be referred to as a DMRS configuration type.

A DMRS to which resource mapping in units of two consecutive (adjacent) symbols is applied, from among DMRSs, may be referred to as a double-symbol DMRS, and a DMRS to which resource mapping in units of one symbol is applied, from among DMRSs, may be referred to as a single-symbol DMRS.

Both of the DMRSs may be mapped to one or more symbols per slot, depending on a length of a data channel. A DMRS mapped to a start location of a data symbol may be referred to as a front-loaded DMRS, and a DMRS additionally mapped to a location other than the start location may be referred to as an additional DMRS.

In a case of DMRS configuration type 1 and a single-symbol DMRS, a Comb and a CS may be used for orthogonalization. For example, up to four antenna ports (APs) may be supported by using two types of Comb and two types of CS (Comb2+2CS).

In a case of DMRS configuration type 1 and a double-symbol DMRS, a Comb, a CS, and a TD-OCC may be used for orthogonalization. For example, up to eight APs may be supported by using two types of Comb, two types of CS, and a TD-OCC ({1, 1} and {1, -1}).

In a case of DMRS configuration type 2 and a single-symbol DMRS, an FD-OCC may be used for orthogonalization. For example, up to six APs may be supported by applying an orthogonal code (2-FD-OCC) to two resource elements (REs) adjacent to each other in a frequency direction.

In a case of DMRS configuration type 2 and a double-symbol DMRS, an FD-OCC and a TD-OCC may be used for orthogonalization. For example, up to 12 APs may be supported by applying an orthogonal code (2-FD-OCC) to two REs adjacent to each other in a frequency direction and applying a TD-OCC ({1, 1} and {1, -1}) to two REs adjacent to each other in a time direction.

In Rel-15 NR, for CSI-RSs with a plurality of ports, up to 32 ports are supported by using FDM, time division multiplexing (TDM), a frequency domain OCC, a time domain OCC, and the like. The same method as that for the above-described DMRS may also be applied to orthogonalization of the CSI-RS.

Incidentally, a DMRS port group orthogonalized by such an FD-OCC/TD-OCC as that described above is also referred to as a code division multiplexing (CDM) group.

Different CDM groups are FDMed, and thus are orthogonal to each other. On the other hand, there is a case where in the same CDM group, orthogonality of an applied OCC collapses due to channel variation or the like. In this case, receiving signals in the same CDM group with different received powers may cause the near-far problem, thereby preventing orthogonality from being assured.

Here, a TD-OCC/FD-OCC for a DMRS of Rel-15 NR will be described. A DMRS mapped to a resource element (RE) may correspond to a sequence obtained by multiplying a DMRS sequence by a parameter (which may be referred to as a sequence element or the like) $w_f(k')$ for an FD-OCC and a parameter (which may be referred to as a sequence element or the like) $w_t(l')$ for a TD-OCC.

Both of the TD-OCC and FD-OCC for the DMRS of Rel-15 NR correspond to an OCC of a sequence length (which may be referred to as an OCC length)=2. For example, Rel-15 type-1/type-2 DMRS ports (for example, rel.15 Type1/Type2 DMRS ports) may be defined with DMRS ports having an FD-OCC length of 2 (for example, DMRS ports with FD-OCC length = 2).

Thus, possible values of each of k' and l' described above are 0 and 1. Multiplying this FD-OCC in units of an RE enables DMRSs with two ports to be multiplexed by using the same time and frequency resources (2 REs). Applying both of these FD-OCC and TD-OCC enables DMRSs with four ports to be multiplexed by using the same time and frequency resources (4 REs).

The two existing DMRS port tables for PDSCH (association between antenna port numbers and parameters) described above correspond to respective DMRS configuration types 1 and 2. Note that p and $\Delta$ indicate an antenna port number and a parameter for shifting (offsetting) a frequency resource, respectively.

For example, $\{w_f(0), w_f(1)\}=\{+1, +1\}$ and $\{w_f(0), w_f(1)\}=\{+1, -1\}$ are applied to antenna ports 1000 and 1001, respectively, thereby orthogonalizing the antenna ports by using an FD-OCC.

Δ of different values are applied to antenna ports 1000 to 1001 and antenna ports 1002 to 1003 (and antenna ports 1004 to 1005 in a case of type 2), thereby applying FDM to the antenna ports. Accordingly, antenna ports 1000 to 1003 (or 1000 to 1005) corresponding to a single-symbol DMRS are orthogonalized by using an FD-OCC and FDM.

$\{w_t(0), w_t(1)\}=\{+1, +1\}$ and $\{w_t(0), w_t(1)\}=\{+1, -1\}$ are applied to antenna ports 1000 to 1003 and antenna ports 1004 to 1007 of type 1, respectively, thereby orthogonalizing the antenna ports by using a TD-OCC. Accordingly, antenna ports 1000 to 1007 (or 1000 to 1011) corresponding to a double-symbol DMRS are orthogonalized by using an FD-OCC, a TD-OCC, and FDM.

For only CP-OFDM, it is studied that a larger number of orthogonal DMRS ports for DL/UL MU-MIMO is defined (without increasing DMRS overhead), that a common design is applied to DL and UL DMRSs, that up to 24 orthogonal DMRS ports are applied, and that for each applicable DMRS configuration type, a maximum number of orthogonal DMRS ports is doubled for both a single-symbol DMRS and a double-symbol DMRS.

In Rel. 15, Cases 1 to 4 below can be configured.

{Case 1} Single-symbol DMRS of DMRS configuration type 1

```
    A total number of DMRS ports is 2 (with comb/FDM) x 2 (with
FD OCC) = 4 ports.
```

{Case 2} Double-symbol DMRS of DMRS configuration type 1

```
    A total number of DMRS ports is 2 (with comb/FDM) x 2 (with
FD OCC) x 2 (with TD OCC) = 8 ports.
```

{Case 3} Single-symbol DMRS of DMRS configuration type 2

```
    A total number of DMRS ports is 3 (with FDM) x 2 (with FD
OCC) = 6 ports.
```

{Case 4} Double-symbol DMRS of DMRS configuration type 2

```
    A total number of DMRS ports is 3 (with comb) x 2 (with FD
OCC) x 2 (with TD OCC) = 12 ports.
```

For Rel. 18, it is studied that the total numbers of DMRS ports are doubled to 8, 16, 12, and 24 for Cases 1, 2, 3, and 4, respectively.

For the increased numbers of DMRS ports, the following five options (methods for increasing the number of DMRS ports) are under study.

<Option 1>

- Introduction of a new OCC having a length (for example, 4 or 6) greater than that of an existing OCC.

In Option 1, items to be studied include a possibility of performance degradation, a possibility of scheduling restriction, backward compatibility, and the like in a case of a large delay spread.

<Option 2>

- Use of a TD-OCC over a plurality of non-consecutive DMRS symbols (for example, a TD-OCC over a front-loaded DMRS/additional DMRS).

In Option 2, items to be studied include a possibility of performance degradation, a possibility of scheduling restriction (for example, a method for applying frequency hopping), a possibility of a limited DMRS configuration (for example, the number of additional DMRSs is limited), backward compatibility, and the like in a case of a high UE speed.

<Option 3>

- Increasing the number of CDM groups (for example, increasing the number of combs/times of FDM).

In Option 3, items to be studied include a possibility of performance degradation, backward compatibility, and the like in a case of a large delay spread.

<Option 4>

- Increasing the number of orthogonal DMRS ports by reusing additional DMRS symbols.

In Option 4, items to be studied include a possibility of performance degradation, a possibility of a limited DMRS configuration (for example, the number of additional DMRSs is limited), backward compatibility, and the like in a case of a high UE speed.

<Option 5>

- Use of a TD-OCC over a plurality of non-consecutive DMRS symbols, the TD-OCC being combined with an FD-OCC/FDM (reusing additional DMRS symbols to improve channel estimation performance).

In Option 5, items to be studied include a possibility of performance degradation, a possibility of scheduling restriction (for example, a method for applying frequency hopping), a possibility of a limited DMRS configuration (for example, the number of additional DMRSs is limited), backward compatibility, and the like in a case of a high UE speed.

Option 1/3 may be supported. In addition, a TD OCC may be supported. A difference between Options 2 and 5 may be whether to support RRC-based semi-static switching between an FD-OCC and a TD-OCC or DCI-based dynamic switching between an FD-OCC and a TD-OCC.

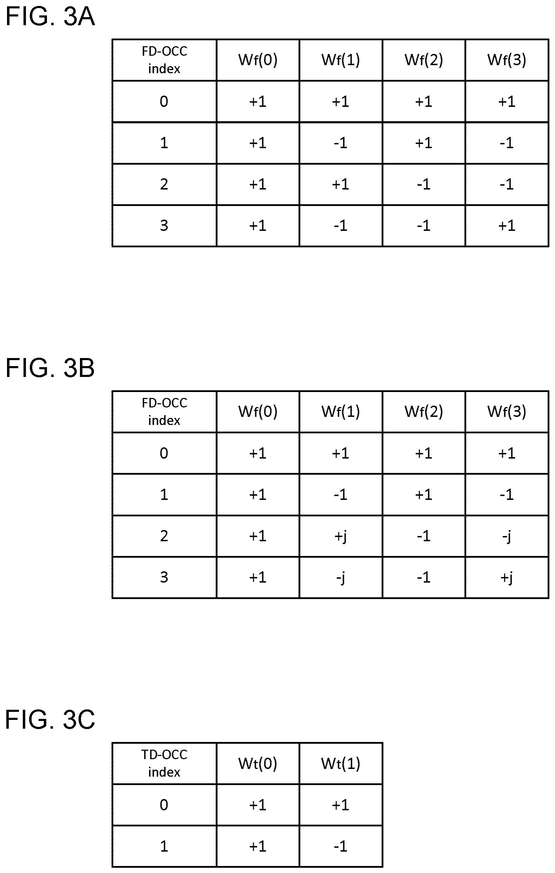

In Option 5 for the methods for increasing the number of DMRS ports described above, as shown in an example in FIG. 3, a new FD-OCC having a length of 4 may be applied, a new TD-OCC having a length of 2 may be applied to a plurality of non-consecutive DMRS symbols, and the number of DMRS ports in one CDM group may be 4. In this case, a reception side decodes one of the FD-OCC and the TD-OCC, thereby allowing signals to be separated from each other, which has an advantage over Option 1/3. For example, the reception side can perform decoding by using only the FD-OCC when using the TD-OCC causes issues such as a case that a characteristic (orthogonality) deteriorates in high-speed movement, a case that channel estimation cannot be started even when only a front-loaded DMRS symbol is received, which requires an additional DMRS symbol to be received, thus leading to delay in PDSCH decoding, and the like. For example, the reception side can perform decoding by using only the TD-OCC when using the FD-OCC causes issues such as a case that a characteristic (orthogonality) deteriorates in a case of a large delay spread, and the like.

In Option 5 for increasing the number of DMRS ports described above, a new FD-OCC having a length of 6 may be applied, and a new TD-OCC having a length of 2 may be applied to a plurality of non-consecutive DMRS symbols.

As described above, in Rel. 18 or later versions, a new FD-OCC having a length longer than 2 is supported. A DMRS port for type 1/type 2 for Rel. 18 or later versions may be referred to as a Rel-18 enhanced-type-1/enhanced-type-2 (enhanced type 1/enhanced type 2) DMRS port, for example. Enhanced type 1/enhanced type 2 may be referred to as e-type 1/e-type 2.

For example, Rel-18 e-type-1/e-type-2 DMRS ports may be defined with DMRS ports having an FD-OCC length longer than 2 (for example, DMRS ports with FD-OCC length > 2). For example, a Rel-18 e-type-1/e-type-2 DMRS port may be of FD-OCC length = 4.

Note that a type-1/type-2 DMRS port with FD-OCC length = 2 defined from Rel. 15 may be referred to as a Rel-15 type-1/type-2 DMRS port.

The Rel-18 e-type-1 DMRS port can have port index p = #1000 to #1015. For example, for DMRS ports with new FD-OCCs #0 and #1, DMRS port indices (DMRS ports #1000 to #1007) the same as that of the Rel-15 DMRS ports may be used. For DMRS ports with new FD-OCCs #2 and #3, DMRS port indices (DMRS ports #1008 to #1015) different from that of the Rel-15 DMRS ports may be used.

The Rel-18 e-type-2 DMRS port can have port index p = #1000 to #1023. For DMRS ports with new FD-OCCs #0 and #1, DMRS port indices (DMRS ports #1000 to #1011) the same as that of the Rel-15 DMRS ports may be used. For DMRS ports with new FD-OCCs #2 and #3, DMRS port indices (DMRS ports #1012 to #1023) different from that of the Rel-15 DMRS ports may be used.

(New OCC for PDSCH/PUSCH DMRS)

In Rel. 18, as new OCCs for a PDSCH/PUSCH DMRS (enhanced-type-1/enhanced-type-2 DMRS), an FD-OCC having a length of 4 and a TD-OCC having a length of 2 are supported. FIGS. 3A to 3C are each a diagram to show an example of new OCCs. The FD-OCC and TD-OCC may each be simply referred to as an OCC.

As shown in FIG. 3A, FD-OCCs having a length of 4 based on a 4-row 4-column Walsh matrix (sequence) may be defined. In FIG. 3A, for FD-OCC index i = {0, 1, 2, 3}, four sequences may be provided. The Walsh matrix may be interpreted as a Hadamard code. The OCCs based on the Walsh matrix (sequence) are useful for DL reception (for example, PDSCH reception).

As shown in FIG. 3B, OCCs having a length of 4 based on a cyclic shift may be defined. In FIG. 3B, for FD-OCC index i = {0, 1, 2, 3}, four sequences may be provided with use of cyclic shift $\{i \cdot 0, i \cdot \pi, i \cdot \pi/2, i \cdot 3\pi/2\}$. The OCCs based on the cyclic shift are useful for UL transmission (for example, PUSCH transmission).

As shown in FIG. 3C, TD-OCCs having a length of 2 may be defined. In FIG. 3C, for TD-OCC index i = {0, 1}, two sequences may be provided.

In association with the OCCs shown in FIG. 3, a table for enhanced-type-1/enhanced-type-2 DMRSs (association between port indices, CDM group indices, and new OCC indices) may be defined. A PDSCH port index may be indicated by a number of a PUSCH port index plus 1000.

A new FD-OCC may be any one of the above-described OCCs.

In each of FIGS. 3A and 3B, OCCs #0 and #1 having a length of 4 (OCCs corresponding to OCC indices 0 and 1) have the first half and second half, each half being the same as OCCs #0 and #1 having a length of 2 (OCCs corresponding to OCC indices 0 and 1) shown in FIG. 3C, for example.

In the present disclosure, an OCC (FD-OCC/TD-OCC) corresponding to OCC index i may be referred to as OCC #i.

Part of a plurality of sequences of a new FD-OCC may be associated with a Rel-15 DMRS port index.

In a case of using an FD-OCC having a length of 2, a Rel-15 DMRS port table for DMRS configuration type 1 and a Rel-15 DMRS port table for DMRS configuration type 2 may be used.

Enhanced DMRS configuration type 1 (DMRS enhanced type 1, DMRS enhanced type = 1, DMRS eType 1) uses a frequency domain arrangement of DMRS configuration type 1 (DMRS type 1, DMRS type = 1, DMRS Type 1) and a new FD-OCC. Enhanced DMRS configuration type 2 (DMRS enhanced type 2, DMRS enhanced type = 2, DMRS eType 2) uses a frequency domain arrangement of DMRS configuration type 2 (DMRS type 2, DMRS type = 2, DMRS Type 2) and a new FD-OCC.

In the present disclosure, DMRS configuration type 1, DMRS type 1, DMRS type = 1, and DMRS Type 1 may be interchangeably interpreted. In the present disclosure, DMRS configuration type 2, DMRS type 2, DMRS type = 2, and DMRS Type 2 may be interchangeably interpreted. In the present disclosure, enhanced DMRS configuration type 1, DMRS enhanced type 1, DMRS enhanced type = 1, and DMRS eType 1 may be interchangeably interpreted. In the present disclosure, enhanced DMRS configuration type 2, DMRS enhanced type 2, DMRS enhanced type = 2, and DMRS eType 2 may be interchangeably interpreted.

In the present disclosure, a maximum DMRS length and maxLength may be interchangeably interpreted.

In the present disclosure, an existing FD-OCC, an FD-OCC having a length of 2, a Rel-15 FD OCC, and $w_f(k')$ may be interchangeably interpreted. In the embodiments, a new FD-OCC, an FD-OCC having a length longer than 2, a Rel-18 FD-OCC, and $w_f(k')$ may be interchangeably interpreted.

(CDM Group)

As described above, a plurality of DMRS ports mapped to the same RE (time and frequency resources) may be referred to as a DMRS CDM group.

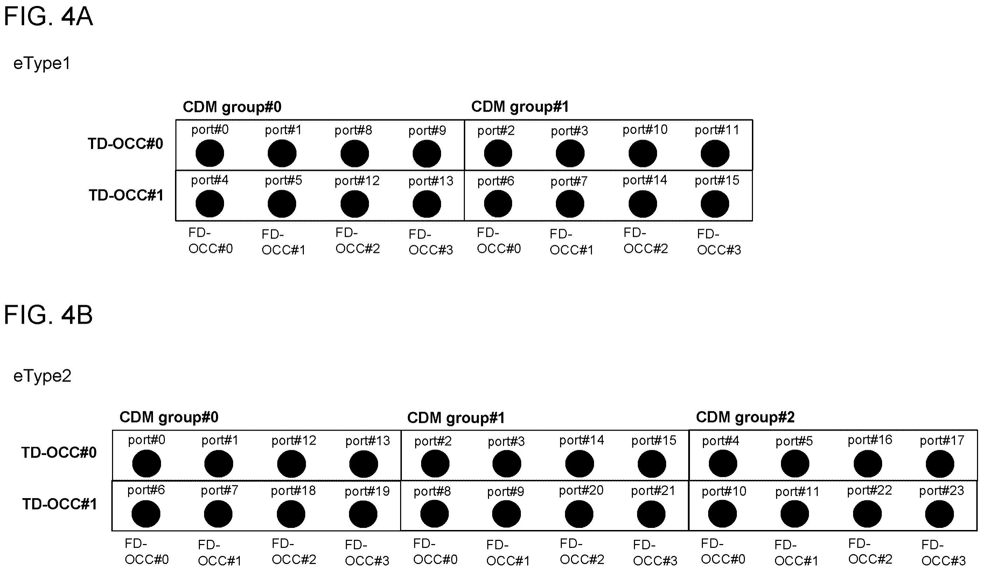

FIG. 4A is a diagram to show an example of association between CDM groups, DMRS ports, and OCCs, in enhanced type 1. FIG. 4B is a diagram to show an example of association between CDM groups, DMRS ports, and OCCs, in enhanced type 2. The DMRS ports in FIGS. 4A and 4B may be referred to as enhanced DMRS ports. Note that FIGS. 4A and 4B are each applicable to both the single-symbol DMRS and double-symbol DMRS.

As shown in FIG. 4A, for DMRS configuration enhanced type 1 and the single-symbol DMRS, eight DMRS ports (ports #0 to #3 and #8 to #11) can be used. In each of the DMRS CDM groups (CDM groups #0 and #1), four DMRS ports (ports #0 to #1 and #8 to #9 or ports #2 to #3 and #10 to #11) are multiplexed by FD OCCs having a length of 4 (FD OCCs #0 to #3). Between the plurality of DMRS CDM groups (two DMRS CDM groups (CDM groups #0 and #1)), two DMRS ports are multiplexed by FDM.

In addition, as shown in FIG. 4A, in a case of DMRS configuration enhanced type 1 and the double-symbol DMRS, eight DMRS ports (ports #4 to #7 and #12 to #15) can be further used. In each of the DMRS CDM groups (CDM groups #0 and #1), four DMRS ports (ports #4 to #5 and #12 to #13 or ports #6 to #7 and #14 to #15) are multiplexed by FD OCCs having a length of 4 (FD OCCs #0 to #3). Between the plurality of DMRS CDM groups (two DMRS CDM groups (CDM groups #0 and #1)), two DMRS ports are multiplexed by FDM. Furthermore, two DMRS ports in the time direction are multiplexed by TD OCCs having a length of 2 (TD-OCCs #0 and #1). In other words, a plurality of (two) CDM groups having the same index are multiplexed by TDM.

In enhanced type 1 shown in FIG. 4A, DMRS ports corresponding to CDM group #0 are {ports #0, 1, 8, 9} and {ports #4, 5, 12, 13} and DMRS ports corresponding to CDM group #1 are {ports #2, 3, 10, 11} and {ports #6, 7, 14, 15}.

As shown in FIG. 4B, for DMRS configuration enhanced type 2 and the single-symbol DMRS, twelve DMRS ports (ports #0 to #5 and #12 to #17) can be used. In each of the DMRS CDM groups (CDM groups #0 to #2), four DMRS ports (ports #0 to #1 and #12 to #13, ports #2 to #3 and #14 to #15, or ports #4 to #5 and #16 to #17) are multiplexed by FD OCCs having a length of 4 (FD OCCs #0 to #3). Between the plurality of DMRS CDM groups (three DMRS CDM groups (CDM groups #0 to #2)), three DMRS ports are multiplexed by

FDM.

In addition, as shown in FIG. 4B, in a case of DMRS configuration enhanced type 2 and the double-symbol DMRS, twelve DMRS ports (ports #6 to #11 and #18 to #23) can be further used. In each of the DMRS CDM groups (CDM groups #0 to #2), four DMRS ports (ports #6 to #7 and #18 to #19, ports #8 to #9 and #20 to #21, or ports #10 to #11 and #22 to #23) are multiplexed by FD OCCs having a length of 4 (FD OCCs #0 to #3). Between the plurality of DMRS CDM groups (three DMRS CDM groups (CDM groups #0 to #2)), three DMRS ports are multiplexed by FDM. Furthermore, two DMRS ports in the time direction are multiplexed by TD OCCs having a length of 2 (TD-OCCs #0 and #1). In other words, a plurality of (two) CDM groups having the same index are multiplexed by TDM.

In enhanced type 2 shown in FIG. 4B, DMRS ports corresponding to CDM group #0 are {ports #0, 1, 12, 13} and {ports #6, 7, 18, 19}, DMRS ports corresponding to CDM group #1 are {ports #2, 3, 14, 15} and {ports #8, 9, 20, 21}, and DMRS ports corresponding to CDM group #2 are {ports #4, 5, 16, 17} and {ports #10, 11, 22, 23}.

(DMRS Port Combination)

For antenna port indication of a DMRS port with maximum DMRS length = 1/2 and with enhanced type 1/enhanced type 2 for a PDSCH, it is under study that all the port combinations of the following some categories can be indicated.

(Category 1) A combination of a plurality of indices of existing ports (p = 0 to 7 for enhanced type 1, p = 0 to 11 for enhanced type 2)

(Category 2) A combination of a plurality of indices of new ports (p = 8 to 15 for enhanced type 1, p = 12 to 23 for enhanced type 2)

(Category 3) A combination of an existing port index and a new port index in at least one CDM group with maximum DMRS length = 1 (at least one combination of up to four ports from p = {0, 1, 8, 9} with up to four ports from p = {2, 3, 10, 11} for enhanced type 1, at least one combination of up to four ports from p = {0, 1, 12, 13} with up to four ports from p = {2, 3, 14, 15} for enhanced type 2) For up to 4 ranks, only one CDM group is used. For more than 4 ranks, more than one CDM groups can be used.

A DMRS port for a PDSCH is determined by p + 1000.

For an enhanced-type-1/enhanced-type-2 DMRS port for a PDSCH/PUSCH, it is under study that maximum DMRS length = 1 and rank = 5, 6, 7, 8 are supported.

(MU-MIMO Scheduling Restriction)

For MU-MIMO, a plurality of DMRSs for a plurality of UEs are multiplexed. The plurality of DMRSs may be CDMed using different OCCs, in one CDM group or may be FDMed using different subcarriers (Comb), between a plurality of CDM groups. In CDM, a problem (near-far problem) due to difference in distances from a base station to the plurality of UEs is caused. Although no inter-symbol interference is caused if an FD-OCC is used in a flat fading environment, use of an FD-OCC in a frequency selective fading environment causes inter-symbol interference, leading quality degradation. In order to prevent this, an MU-MIMO scheduling restriction (existing MU-MIMO scheduling restriction) is defined.

Note that, similarly, although no inter-symbol interference is caused if a TD-OCC is used in an environment without any fluctuation in the channel state of the time domain (static state), use of a TD-OCC in an environment with fluctuation in the channel state of the time domain (mobile state) causes inter-symbol interference, leading quality degradation.

For a PDSCH using DMRS configuration type 1, the following MU-MIMO scheduling restriction is defined.

- In DMRS configuration type 1, when a UE is scheduled with one codeword (CW) and is assigned antenna port mapping with indices {2, 9, 10, 11, 30} in an existing antenna port table for DMRS configuration type 1, or the UE is scheduled with two CWs, the UE may assume that the rest of orthogonal antenna ports are not associated with transmission of a PDSCH to another UE.

For a case that the number of DMRS CDM groups without data being 1 and rank 1 (one DMRS port) are indicated, no restriction may be provided in the same CDM group (for a DMRS port of the UE, one DMRS port of such another UE may be CDMed). For a case that the number of DMRS CDM groups without data being 1 and rank 2 (two DMRS ports) are indicated, all the DMRS ports in the same CDM group are indicated, and thus, in the same CDM group, for a DMRS port of the UE, no DMRS port of such another UE can be CDMed. For a case that the number of DMRS CDM groups without data being 2 and rank 3 (three DMRS ports) are indicated, three DMRS ports out of four DMRS ports in the two CDM groups are indicated, and thus, in spite of one DMRS port being available, one DMRS port of such another UE cannot be CDMed to the available DMRS port. For a case that the number of DMRS CDM groups without data being 2 and rank 4 (four DMRS ports) are indicated, all the DMRS ports in a same CDM group are indicated, and thus, in the same CDM group, for a DMRS port of the UE, no DMRS port of such another UE can be CDMed.

In a case where a UE is configured with a Rel-18 DMRS port, the UE may follow at least one of the following some restrictions.

- Restriction 1

An existing MU-MIMO scheduling restriction is applied. This means that many DMRS ports are not used for another UE. For example, in a case where, for more than 4 ranks and for two CWs, a DMRS port combination of category 1/2 is used, no available port is used for such another UE.

- Restriction 2

An MU-MIMO scheduling restriction is updated. The UE may follow at least one of the following some restrictions.

-- Restriction 2-1

No existing MU-MIMO scheduling restriction is provided. No MU-MIMO scheduling restriction for any Rel-18 DMRS port may be provided.

-- Restriction 2-2

Some new MU-MIMO scheduling restrictions are introduced.

-- Restriction 2-3

No MU-MIMO scheduling restriction across a plurality of different CDM groups is provided and a new MU-MIMO scheduling restriction in one CDM group is introduced.

The MU-MIMO scheduling restriction in Restriction 1 may mean that, when a DMRS port combination using two CDM groups #0 and #1 is indicated in enhanced type 2, no DMRS port in another CDM group #2 can be applied to another UE.

For the MU-MIMO scheduling restriction in Restriction 2-3, when a DMRS port combination using two CDM groups #0 and #1 is indicated in enhanced type 2, a DMRS port in another CDM group #2 can be allocated to another UE.

(Analysis)

Incidentally, in a case where a Rel-18 DMRS port is used, it is expected to control scheduling of a PUSCH/PDSCH for one/two codewords (CWs). Meanwhile, studies have not sufficiently been made on an antenna port table to be referred to in such a case, and the like. Unless these are clearly defined, no suitable improvement in communication throughput/communication quality may be provided.

In view of this, the inventors of the present invention came up with the idea of a control method for a case that a Rel-18 DMRS port is defined.

Embodiments according to the present disclosure will be described in detail with reference to the drawings as follows. Note that the embodiments (for example, respective cases) to be described below may each be used individually, or at least two of the embodiments may be employed in combination.

(Various Interpretation etc.)

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

Note that a CORESET pool and a CORESET pool index may be interchangeably interpreted.

In the present disclosure, description "Rel. XX" represents 3GPP release. Note, however, that the release number "XX " is an example, and may be replaced with another number.

In the present disclosure, a DMRS, a DL DMRS, a UL DMRS, a PDSCH DMRS and a PUSCH DMRS may be interchangeably interpreted.

In the present disclosure, an RE, an RB, and a PRB may be interchangeably interpreted.

In the present disclosure, an orthogonal sequence, an OCC, an FD OCC, and a TD OCC may be interchangeably interpreted.

In the present disclosure, a DMRS port, an antenna port, a port, and a DMRS port index may be interchangeably interpreted. In the present disclosure, DMRS CDM group(s), CDM group(s), DMRS group(s), DMRS CDM group(s) without data, and the like may be interchangeably interpreted. In the present disclosure, antenna port indication and an antenna port field may be interchangeably interpreted. In the present disclosure, a DMRS configuration type, a DMRS type, and an RRC parameter "dmrs-Type" may be interchangeably interpreted. In the present disclosure, a maximum DMRS length, a maximum number of DMRS symbols, the number of DMRS symbols, and an RRC parameter "maxLength" may be interchangeably interpreted.

In the present disclosure, DMRS type1 (or DMRS type=1) may mean that an RRC parameter "dmrs-Type" is not configured (for example, an RRC parameter "dmrs-Type" is absent in a DMRS configuration (DMRS-DownlinkConfig information element/DMRS-UplinkConfig information element), or may mean that "1" (or type 1 (type1)) is configured as an RRC parameter related to a DMRS type.

In the present disclosure, a maximum DMRS length=1 may mean that an RRC parameter "maxLength" is not configured (for example, an RRC parameter "maxLength" is absent in a DMRS configuration (DMRS-DownlinkConfig information element/DMRS-UplinkConfig information element), or may mean that "1" (or a length of 1 (len1)) is configured as an RRC parameter related to a maximum DMRS length.

In the present disclosure, a CDM group list, a port group list, and a list may be interchangeably interpreted. In the present disclosure, a CDM group subset, a port group subset, and a group subset may be interchangeably interpreted.

In the present disclosure, a rank, a transmission rank, the number of layers, and the number of antenna ports may be interchangeably interpreted. One codeword being applied and the number of layers being 4 layers or less may be interchangeably interpreted. Two codewords being applied and the number of layers being greater than 4 layers may be interchangeably interpreted.

In the present disclosure, "transform precoding being configured" may be interchangeably interpreted as "transform precoding being configured to be enabled."

Note that, in the present disclosure, "having capability of ..." may be interchangeably interpreted as "supporting/reporting capability of ...."

In the present disclosure, a table and one or a plurality of tables may be interchangeably interpreted.

In the present disclosure, STxMP, SiMPUL, simultaneous transmission using multi-panel, multi-panel simultaneous transmission, and multi-panel simultaneous UL transmission may be interchangeably interpreted. STxMP may mean that one PUSCH/PUCCH/SRS is indicated/configured with a plurality of joint/UL TCI states, spatial relations, or beams. In the present disclosure, supporting and being configured/indicated may be interchangeably interpreted. In the present disclosure, transmit power and output power may be interchangeably interpreted. In the present disclosure, determination by a UE and configuration/indication by a network (base station/gNB) may be interchangeably interpreted.

In the present disclosure, a UL panel, a UE panel, a (same) antenna coherent group, a UL/joint TCI, a spatial relation, a PL-RS, and a (same) destination TRP may be interchangeably interpreted.

In the present disclosure, 8Tx and UL transmission with more than 4 layers/ranks may be interchangeably interpreted.

In the present disclosure, a Rel-15 DMRS port, a Rel-15 type-1/2 DMRS port, and an existing DMRS port may be interchangeably interpreted. In the present disclosure, a Rel-18 DMRS port, a Rel-18 enhanced-type-1/2 DMRS port, and a new DMRS port may be interchangeably interpreted. Note that a Rel-18 DMRS port may correspond to a DMRS port having the defined total number of ports twice or more (for example, twice, three times, four times, ...) as compared with a Rel-15 DMRS port.

In the present disclosure, a DMRS in a case where use of a Rel-15 DMRS port is configured or where use of a Rel-18 DMRS port is not configured (not enabled) may be referred to as a Rel-15 DMRS. In the present disclosure, a DMRS in a case where use of a Rel-18 DMRS port is configured (enabled) may be referred to as a Rel-18 DMRS. From among Rel-15 DMRSs, a DMRS for type 1/2 may be referred to as a Rel-15 type-1/2 DMRS, or simply referred to as a type-1/2 DMRS or the like. From among Rel-18 DMRSs, a DMRS for enhanced type 1/2 may be referred to as a Rel-18 enhanced-type-1/2 DMRS, or simply referred to as an enhanced-type-1/2 DMRS or the like.

In the present disclosure, a Rel-15 DMRS configuration type, a DMRS configuration type, and a type may be interchangeably interpreted. A Rel-18 DMRS configuration type, an enhanced DMRS configuration type, an enhanced type, and an e-type may be interchangeably interpreted.

In the present disclosure, an antenna port table and an antenna port indication table may be interchangeably interpreted. In the present disclosure, a DMRS port combination, a combination of DMRS ports, and one or more DMRS ports corresponding to one value in an antenna port field may be interchangeably interpreted.

In the embodiments, a case that a Rel-18 DMRS port is configured and a case that DMRS enhanced type 1/2 is configured may be interchangeably interpreted.

In the antenna port table of each embodiment, values for antenna port field values, the number of DMRS CDM groups without data, and DMRS ports are examples, and other values may be defined.

In a new antenna port table in a case of using Rel-18 DMRS ports, part or all of DMRS port combinations in an existing antenna port table may be reused. In this case, only DMRS port(s) from among DMRS ports 0 to 7 may be indicated for DMRS enhanced type 1, and only DMRS port(s) from among DMRS ports 0 to 11 may be indicated for DMRS enhanced type 2.

In each embodiment, regarding application of a plurality of TCI states in transmission and reception using a plurality of TRPs, although a method for two TRPs (i.e., a case that at least one of N and M is 2) will be mainly described, the number of TRPs may be three or more (a plurality of TRPs), and each embodiment may be applied to comply with the number of TRPs. In other words, at least one of N and M may be a number greater than 2.

Each embodiment may be applied to a PDSCH DMRS, or may be applied to a PUSCH DMRS. A PUSCH DMRS port index may be represented by p, and a PDSCH DMRS port index may be represented by p+1000. Furthermore, p may be replaced with Value (row index) in a table of the present disclosure.

Each embodiment may be applied to the single-symbol DMRS, or may be applied to the double-symbol DMRS. Each of the following embodiments may be applied to DMRS configuration type 1, or may be applied to DMRS configuration type 2.

Each embodiment may be applied to DMRS enhanced type 1, or may be applied to DMRS enhanced type 2. Each embodiment may be applied to maximum DMRS length = 1, or may be applied to maximum DMRS length = 2.

In each embodiment, an MU-MIMO scheduling restriction and a case that an available (remaining) orthogonal DMRS port(s) is not used for another UE may be interchangeably interpreted.

(Radio Communication Method)

A DMRS port for a PDSCH may be specified by an antenna port field in a DCI format (for example, DCI format 1_1/1_2) for scheduling of the PDSCH.

A DMRS port for a PUSCH may be specified by an antenna port field in a DCI format (for example, DCI format 0_1/0_2) for scheduling of the PUSCH.

A UE may refer to a new antenna port table (which may be referred to as an antenna port table, an antenna port indication table, or the like) to judge an antenna port corresponding to a value of the antenna port field described above.

Note that a case that the UE uses Rel-15 DMRS ports may mean that antenna port indices p of p = #0 to #7 for type 1 and p = #0 to #11 for type 2 are used (usable). A case that the UE uses Rel-18 DMRS ports may mean that antenna port indices p of p = #0 to #15 (or #8 to #15) for type 1 and p = #0 to #23 (or #12 to #23) for type 2 are used (usable).

Note that, in the present disclosure, a port index for a PDSCH/PUSCH DMRS may correspond to a number (for example, #1000) obtained by adding 1000 to an illustrated number, or may correspond to the illustrated number itself (for example, #0). For a port index for a PDSCH/PUSCH DMRS, a port index for a PDSCH/PUSCH may correspond to a number obtained by adding or subtracting 1000 to or from the port index for the PDSCH/PUSCH DMRS, or may be the same as the port index for the PDSCH/PUSCH

DMRS.

The new antenna port table described above may be a table for Rel-18 enhanced-type-1/2 DMRS ports. For the new antenna port table, it is preferable that a DCI code point (or a row entry in the table) include a DMRS port combination of at least one of Categories 1 to 3 below for maximum number (which may be referred to as maximum length and may be given by a higher layer parameter "maxLength") = 1 or 2:

- Category 1: Only legacy DMRS ports (DMRS ports defined in versions up to Rel. 17; p = #0 to #7 for eType1, and p = #0 to #11 for eType2)
- Category 2: Only new DMRS ports (DMRS ports additionally defined in Rel. 18 or later versions; p = #8 to 15 for eType1, and p = #12 to 23 for eType2)
- Category 3: Legacy DMRS ports and new DMRS ports in at least one CDM group

A combination of new DMRS ports in Category 2 may be a combination obtained by adding X to each port index in a combination of DMRS ports in Category 1. For example, X may be a number of 8 or greater (for example, 8) in a case of eType1, or may be a number of 12 or greater (for example, 12) in a case of eType2. X described above may be defined in a standard in advance, may be configured for a UE by using higher layer signaling, or may be determined based on UE capability. X described above may be referred to as an offset indicator (offset index) or simply an offset.

The legacy DMRS ports and new DMRS ports in Category 3 may correspond to, for example, the following combination:

- The number of ranks in a CDM group: 3 or 4
- CDM group index: 0 or 1 for eType1 and 0, 1, or 2 for eType2
- The number of CDM groups without data: 1 or 2 for eType1 and 1, 2, or 3 for eType2

Note that the legacy DMRS ports and new DMRS ports in Category 3 need not include all of the combinations described above. For example, regarding the number of CDM groups without data corresponding to the legacy DMRS ports and new DMRS ports in Category 3, (code point(s) corresponding to) 1, 2, or both may be defined in the antenna port table for eType1, or (code point(s) corresponding to) any one or more of 1, 2, and 3 may be defined in the antenna port table for eType2.

The DMRS ports in Category 3 may be the legacy DMRS ports and new DMRS ports with a specific rank (for example, rank 3/4) in the same CDM group.

As a combination of legacy DMRS ports and new DMRS ports in at least one CDM group, the DMRS ports in Category 3 may include the following:

- Up to four ports from among p = {#0, 1, 8, 9} or {#2, 3, 10, 11}, for eType1
- Up to four ports from among p = {#0, 1, 12, 13}, {#2, 3, 14, 15}, or {#4, 5, 16, 17}, for eType2)

Such a combination may be at least applied to a single TRP.

In Category 3, in a case of up to rank 4, only one CDM group may be used per UE. In a case of rank 4 or more, a plurality of CDM groups may be used per UE.

In the following embodiments, although examples of an antenna port table for a PDSCH DMRS are described, the coverage of the present disclosure is not limited to this. For example, (a configuration method for) the antenna port table of each of the following embodiments may be interpreted as (a configuration method for) an antenna port table for a PUSCH DMRS as appropriate.

For example, DCI in the following embodiments may correspond to a DCI format for a PDSCH (for example, DCI format 1_1/1_2) or may correspond to a DCI format for a PUSCH (for example, DCI format 0_1/0_2).

An antenna port table for a PUSCH DMRS may include only DMRS ports for one rank, unlike an antenna port table for a PDSCH DMRS. The number of ranks (the number of layers) for a PUSCH DMRS may be indicated to a UE by using a "precoding information and number of layers" field, for example.

Note that, for the antenna port table in each of the following embodiments, although an example is described that all of the DMRS port combinations of Categories 1 to 3 described above are included in any of DCI code points (or row entries in the table), the embodiments are not limited to this. For example, an antenna port table without including at least one of the DMRS port combinations of Categories 1, 2, and 3 may be configured/used based on the details of the present disclosure.

Note that, in the antenna port tables of the following embodiments, the column "Notes" is provided for a supplementary description, which may not need to be included (not need to be defined) in the tables. In the antenna port tables of the following embodiments, regarding each category, all the rows may not need to be defined (part of the rows may be omitted), or an undescribed row (combination) may be defined/added. In the antenna port tables, a correspondence relation of a DMRS port index combination with the number of DMRS CDM groups without data, row index, and corresponding entry (various values in the tables) may differ. In other words, the order of rows may be changed. In a case where part of the rows is omitted/deleted (is not defined), indices (Values) of the subsequent rows may be moved up.

In the present disclosure, an antenna port field value (Value) may be interpreted as a row index.

In the present disclosure, a single TRP may be interpreted as one transmission/reception point and multi-TRP may be interpreted as a plurality of transmission/reception points.

Among the antenna port tables of the embodiments to be described below, (1) an antenna port table for a single TRP (for indication of a single TRP operation) may at least include entries except entries indicated with []. Furthermore, (2) an antenna port table for multi-TRP (for indication of a multi-TRP operation) may include, in addition to the entries of the antenna port table for the single TRP described above, the entries indicated with []. The entries indicated with [] may be associated with a DMRS port across CDM groups (an antenna port corresponding to multi-TRP), for example.

In other words, the antenna port tables to be described below may be separately defined depending on (1) and (2) described above or on categories. In this case, in accordance with a scenario to be applied (single TRP/multi-TRP or any of Categories 1 to 3), an antenna port table to be used may be switched. Such switching of (the number of rows of) the antenna port table in accordance with the scenario enables an antenna port table to be indicated flexibly and efficiently. An antenna port table may be defined with (1) and (2) described above integrated into one table.

The switching of the scenario described above may be implemented based on higher layer signaling. The switching of the scenario need not be implemented and only an antenna port table for multi-TRP may be used. In other words, the antenna port table for multi-TRP may also serve as an antenna port table for a single TRP.

A DMRS port for a PDSCH may be indicated not only by an antenna port field in a DCI format (for example, DCI format 1_1/1_2) for scheduling of the PDSCH but alternatively by another existing field, new DCI field, or any combination of these fields and the antenna port field. Furthermore, a specific DMRS port may be indicated by a combination of a new indicator with an existing field such as a Time Domain Resource Assignment/Allocation (TDRA) field/Frequency Domain Resource Assignment/Allocation (FDRA) field.

In the present disclosure, an antenna port table for a single TRP and antenna port table for multi-TRP may be separately defined or a common antenna port table for them may be defined. In either antenna port table, antenna port fields included in DCI format 1_1/1_2 may have separate sizes. In such a case, an antenna port field for the single TRP may have a size smaller than that of an antenna port field for the multi-TRP. Specifically, for example, an antenna port field for the single TRP may have a size of 4 bits and an antenna port field for the multi-TRP may be of 5 bits.

<First Embodiment>

A first embodiment relates to an antenna port field for a PDSCH.

{Embodiment 1.1}

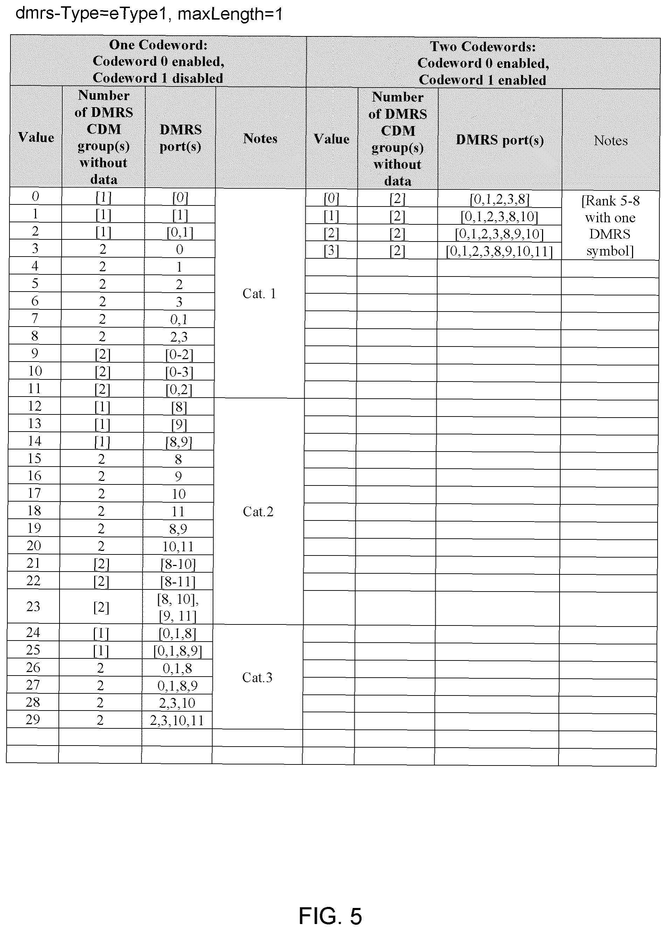

In Embodiment 1.1, a case of DMRS type = enhanced type 1 and maximum DMRS length = 1 is described. FIG. 5 shows an example of an antenna port table in the case of DMRS type = enhanced type 1 and maximum DMRS length = 1.
In FIG. 5, the left side of the table corresponds to 4 layers or less, and is referred to when a PDSCH with one codeword is scheduled. The right side of the table corresponds to 5 layers or more, and is referred to when a PDSCH with two codewords is scheduled.
In this example, (the left side of) the antenna port table includes DMRS port combinations only including category-1 DMRS ports (existing ports), DMRS port combinations only including category-2 DMRS ports (new ports), and DMRS port combinations including category-3 DMRS ports (both existing and new ports).
In the example, antenna port field values (Values) = 0 to 11, 12 to 23, and 24 to 29 in a case of one codeword (one CW) correspond to Category 1, Category 2, and Category 3, respectively.
Regarding X described above for category-2 DMRS ports in the example, X = 8 (the DMRS port indices corresponding to antenna port field values = 12 to 23 respectively correspond to indices obtained by +8 (adding 8) to all of the DMRS port indices corresponding to antenna port field values = 0 to 11). X described above may be referred to as an offset indicator (offset index) or simply an offset. In this case, the offset is represented by +8.
The DMRS port combinations for category-3 DMRS ports (corresponding to antenna port field values = 24 to 29) in the example each relate to rank 3 or 4, and include only DMRS ports in the same CDM group.
In the table of FIG. 5, antenna port field values (Values) = 0 to 3 in a case of two codewords (two CWs) respectively correspond to ranks 5 to 8. Since maximum DMRS length = 1, with one DMRS symbol, DMRSs for two codewords can be transmitted.
Note that a UE may be configured, from a base station, with information on a maximum number of codewords possible to be scheduled by DCI (for example, an RRC parameter "maxNrofCodeWordsScheduledByDCI"), and may judge to refer to the right side of the antenna port table when the information indicates a value greater than 1 and the DCI includes a plurality of specific fields (for example, MCS fields).
With respect to the DMRS port combinations in the case of one CW (the left half of the table) in Embodiment 1.1, row entries (which may be simply referred to as entries) indicated with [] are specifically described. An antenna port field value, Value, and a row index may be interchangeably interpreted.
In FIG. 5, entries with antenna port field values (Values) = 0 to 2, 12 to 14, and 24 to 25 may be associated with the number of DMRS CDM groups without data = 1 (specifically, this means DMRSs and data are FDMed). The entries enable throughput of a UE to be maximized by multiplexing the data and DMRSs by FDM temporarily in accordance with traffic amount and the like, even in a case of MU-MIMO. In other words, the entries may be applied not only to SU-MIMO but also to MU-MIMO.
Entries with antenna port field values (Values) = 9 to 11 and 21 to 23 may be associated with the number of DMRS CDM groups without data = 2. The entries may correspond to rank 3/4. The entries may not need to be included for a case of a single TRP.
For entries corresponding to rank 3/4, although Values = 24 to 29 already exist, providing entries other than these enables efficient UE multiplexing in one CDM group. In other words, rather than multiplexing a plurality of UEs in the same CDM group, performing UE multiplexing in separate CDM groups makes it easier to ensure orthogonality.
Meanwhile, in multi-TRP, it is possible to use DMRS ports of separate CDM groups. In multi-TRP, a received power difference from among the TRPs is assumed. With this, in a case where orthogonality between DMRS ports collapses (such as a case where frequency selectivity is strong), interference, with respect to a DMRS port for a TRP with relatively weak received power, from a DMRS port for a TRP with relatively strong received power may cause characteristic deterioration. Thus, the respective TRPs are preferable to use DMRS ports corresponding to separate CDM groups.
The entry with the antenna port field value (Value) = 11 may be associated with the number of DMRS CDM groups without data = 2 and DMRS ports = {0, 2}. With this entry, it is useful regardless of a single TRP/multi-TRP. For example, when the entry is selected, no MU-MIMO is applied (no available DMRS port is used for another UE), and thus the processing is simplified. With respect to a UE that uses the entry (antenna port), another UE is not able to use any available DMRS port. Thus, in the entry of Value = 23 to be described below, a combination of DMRS ports = {8, 10} need not be defined. In other words, a gNB can only indicate either DMRS ports = {0, 2} or {8, 10}, preventing the gNB from indicating the respective DMRS ports to separate UEs at the same time.
The entry with the antenna port field value (Value) = 23 may be associated with the number of DMRS CDM groups without data = 2 and DMRS ports = {8, 10} and {9, 11}. For example, in a case where DMRS ports = {0, 1, 8} for certain UE #1 are indicated and DMRS ports = {2, 3, 10} for another UE #2 are indicated, indicating DMRS ports = {9, 11} to another UE #3 at the same time allowing orthogonal DMRS ports to be effectively used up to the limit.

For example, in the entry with the antenna port field value (Value) = 23, in a case of DMRS ports = {8, 10} (for example, a case of 2 + 2 = 4 layers between two UEs), multiplexing to DMRS ports = {0, 2}, {1, 3}, or {9, 11} of another UE in the same CDM group is possible.

In the entry with the antenna port field value (Value) = 23, in a case of DMRS ports = {9, 11} (for example, a case of 3 + 3 + 2 = 8 layers between three UEs), multiplexing to DMRS ports = {0, 1, 8} and {2, 3, 10} of another UE in the same CDM group is possible.

As described above, the entry with the antenna port field value (Value) = 23 may not need to be included in the table.

Regarding the DMRS port combination for each rank in the case of two CWs (the right half of the table) in Embodiment 1.1, at least one combination of the following may be defined:

- a combination of port indices {0, 1, 2, 3, 8}, for rank 5
- a combination of port indices {0, 1, 2, 3, 8, 10}, for rank 6
- a combination of port indices {0, 1, 2, 3, 8, 9, 10}, for rank 7
- a combination of port indices {0, 1, 2, 3, 8, 9, 10, 11}, for rank 8

The DMRS port combinations in the case of one CW (the left half of the table) in the first embodiment may include a combination different from the above-described example and, for each rank, at least one combination of the following may be defined:

- a combination of one index from among port indices {0, 1, 2, 3, 8, 9, 10, 11}, for rank 1
- a combination of two indices from among port indices {0, 1, 2, 3, 8, 9, 10, 11}, for rank 2
- a combination of three indices from among port indices {0, 1, 2, 3, 8, 9, 10, 11}, for rank 3
- a combination of four indices from among port indices {0, 1, 2, 3, 8, 9, 10, 11}, for rank 4

Here, the above-described "port indices {0, 1, 2, 3, 8, 9, 10, 11}" and "either one of a first set (for example, {0, 1, 2, 3}) or a second set (for example, {8, 9, 10, 11})" may be interchangeably interpreted. The first/second set may be defined in advance in a standard, may be configured for a UE by using higher layer signaling, or may be determined based on UE capability. Which of the first or second set the index (indices) is selected from may be defined in a standard in advance, may be configured for a UE by using higher layer signaling, or may be judged based on UE capability.

Variation of {Embodiment 1.1}

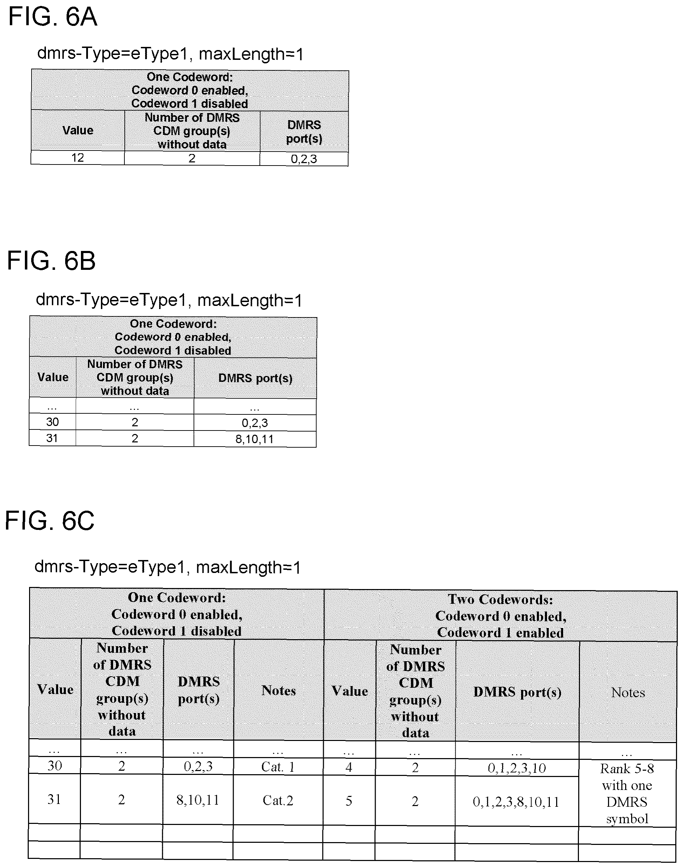

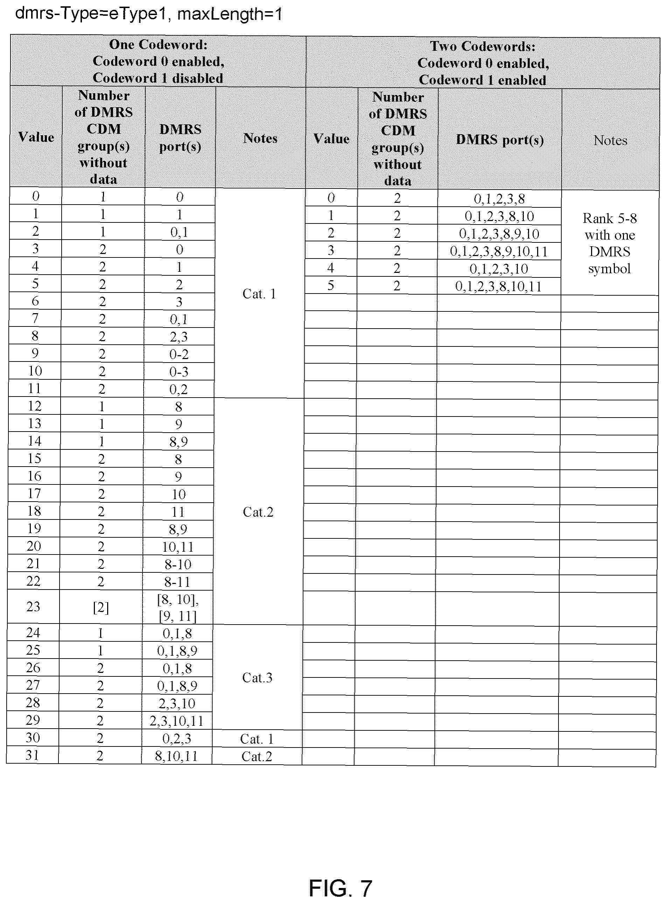

FIGS. 6A to 6C each show a variation of the antenna port table in the case of DMRS type = enhanced type 1 and maximum DMRS length = 1. FIG. 7 shows another example of the antenna port table in the case of DMRS type = enhanced type 1 and maximum DMRS length = 1.

For a case of single-DCI-based multi-TRP, an antenna port table different from the above may be defined. For example, in the table of FIG. 5 described above, the entry with the antenna port field value (Value) = 12 may be defined as shown in FIG. 6A (may be replaced with that of FIG. 6A). In FIG. 6A, the number of DMRS CDM groups without data = 2 may be associated with DMRS ports = {0, 2, 3}.

For example, in the entries with the antenna port field values (Values) = 9 to 11 of FIG. 5 described above, a combination of DMRS ports = {0, 1, 2} is supported. This enables indication of 2 + 1 = 3 layers for two CDM groups. Meanwhile, supporting DMRS ports = {0, 2, 3} in the entry with the antenna port field value (Value) = 12 enables indication of 1 + 2 = 3 layers for two CDM groups.

In the table of FIG. 5 described above, entries with antenna port field values (Values) = 30 and 31 may be defined (may be added), as shown in FIG. 6B. In FIG. 6B, in the entry of Value = 30, the number of DMRS CDM groups without data = 2 may be associated with DMRS ports = {0, 2, 3}, and in the entry of Value = 31, the number of DMRS CDM groups without data = 2 may be associated with DMRS ports = {8, 10, 11}.

In the table of FIG. 5, the entry of Value = 9 supports the combination of DMRS ports = {0, 1, 2}, and the entry of Value = 21 supports the combination of DMRS ports = {8, 9, 10}. This enables indication of 2 + 1 = 3 layers for two CDM groups. Meanwhile, supporting DMRS ports = {0, 2, 3} in the entry of Value = 30 and supporting DMRS ports = {8, 10, 11} in the entry of Value = 31 enable indication of 1 + 2 = 3 layers for two CDM groups.

In the table of FIG. 5 described above, entries of Values = 30 and 31 corresponding to one codeword and entries of Values = 4 and 5 corresponding to two codewords may be defined (may be added), as shown in FIG. 6C. Since the entries of Values = 30 and 31 corresponding to one codeword are the same as that of FIG. 6B, the description is omitted.

In FIG. 6C, in the entry of Value = 4 corresponding to two codewords, the number of DMRS CDM groups without data = 2 may be associated with DMRS ports = {0, 1, 2, 3, 10}, and in the entry of Value = 5 corresponding to two codewords, the number of DMRS CDM groups without data = 2 may be associated with DMRS ports = {0, 1, 2, 3, 8, 10, 11}.

In FIG. 5 described above, the combinations for rank 5 (3 + 2 = 5 layers), rank 6 (3 + 3 = 6 layers), rank 7 (4 + 3 = 7 layers), and rank 8 (4 + 4 = 8 layers) corresponding to two CDM groups are supported. With the added entries (Values = 4 and 5) shown in FIG. 6C, it is possible to support combinations for rank 5 (2 + 3 = 5 layers) and rank 7 (3 + 4 = 7 layers), for example. Not limited to this, combinations for rank 5 (4 + 1/1 + 4) and rank 6 (4 + 2/2 + 4) may be supported.

Note that FIG. 7 shows an example where the row entries of FIG. 6C are added to the table of FIG. 5.

{Embodiment 1.2}

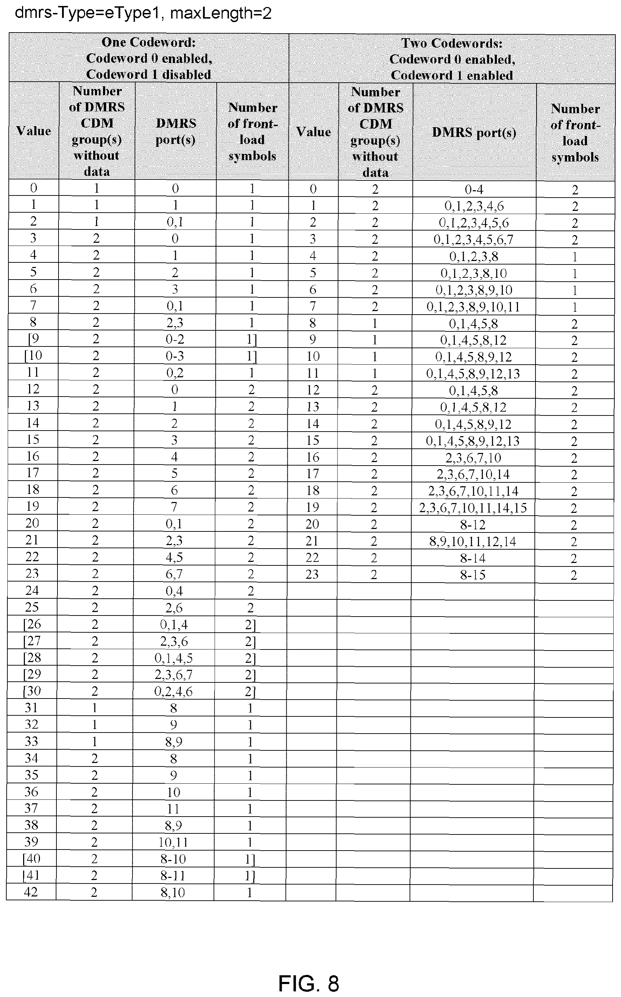

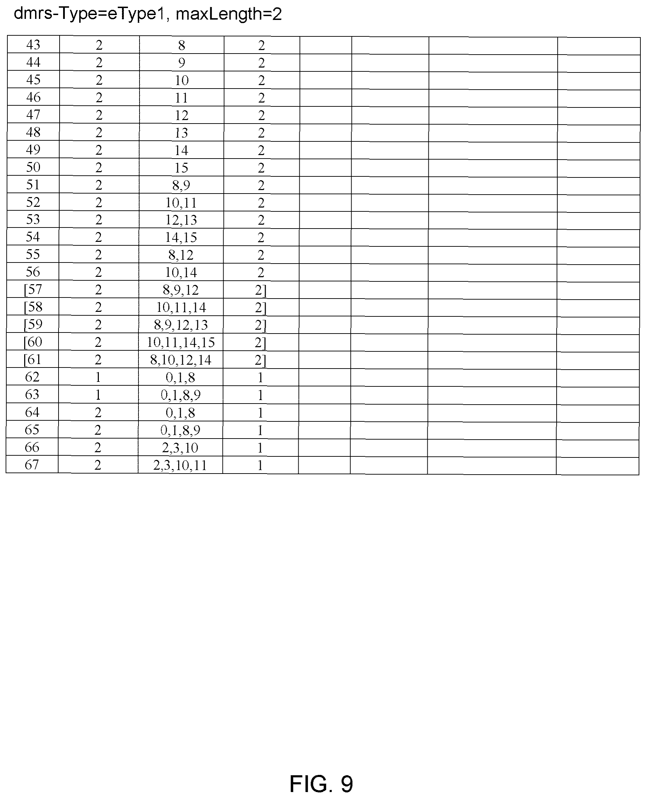

In Embodiment 1.2, a case of DMRS type = enhanced type 1 and maximum DMRS length = 2 is described. Note that, in Embodiment 1.2, description is omitted on details that may be the same as that in Embodiment 1.1 (or that may be, for example, controlled/configured/adjusted similarly to Embodiment 1.1). FIGS. 8 and 9 show an example of an antenna port table in a case of DMRS type = enhanced type 1 and maximum DMRS length = 2.

Note that the antenna port table according to Embodiment 1.2 is shown across two figures, FIGS. 8 and 9, due to the number of rows. In other words, in the example, in FIGS. 8 and 9, one table is defined with the two figures integrated. More specifically, description will be made assuming that the lowest row (Value = 42) in FIG. 8 is, immediately thereafter, followed by the highest row (Value = 43) in FIG. 9. As described above, the table shown in FIGS. 8 and 9 is only an example, and thus divided tables may be defined depending on a scenario to be applied (single TRP/multi-TRP, or any of Categories 1 to 3).

Firstly, row entries for one CW (the left half of FIGS. 8 and 9) are described. In the antenna port table shown in the example, Values = 0 to 11 for one CW may correspond to Values = 0 to 11 in FIG. 5 (FIG. 7). Values = 0 to 30, 31 to 61, and 62 to 67 may correspond to Category 1, Category 2, and Category 3, respectively. Note that, in Category 3, in a case of up to 4 ranks, only one CDM group may be used per UE.

Values = 12 to 14 in FIG. 5 (FIG. 7) may correspond to Values = 31 to 33 in the example. Values = 21 to 22 in FIG. 5 (FIG. 7) may correspond to Values = 40 to 41 in the example. Values = 24 to 25 in FIG. 5 (FIG. 7) may correspond to Values = 62 to 63 in the example.

The entries of Values = 12 to 30 (corresponding to FIG. 8) and 43 to 61 (corresponding to FIG. 9) in the example are row entries newly added to FIG. 5. In other words, the entries of Values = 12 to 30 and 43 to 61 indicate a case that the number of front-load symbols is two. For the other Values, the number of front-load symbols may be one.

Values = 43 to 61 in the example may be associated with the number of DMRS CDM groups without data = 2 and the number of front-load symbols = 2. For these row entries, a plurality of DMRS ports may be indicated, by using a DMRS having a length of 2 in the same CDM group.

Values = 0 to 2, 31 to 33, and 62 to 63 are associated with the number of DMRS CDM groups without data = 1, and thus overhead of DMRSs is possible to be reduced.

Entries indicated with [] such as Values = 9 to 10, 26 to 30, 40 to 41, and 57 to 61 may not need to be defined (for example, may be deleted in a case of a single TRP), since Values = 62 to 67 corresponding to Category 3 are supported. In a case where such entries are deleted, indication with an antenna port field of 6 bits is possible.

With the entry of Value = 42, multiplexing to DMRS ports = {0, 2}, {1, 3}, or {9, 11} of another UE in the same CDM group is possible (for example, a case of 2 + 2 = 4 layers between two UEs). However, when DMRS ports = {0, 2} are indicated in Value = 11, other DMRS ports are not used for another UE. Thus, the entry of Value = 42 may not need to be defined (may be deleted).

Next, row entries for two CWs (the right half of FIG. 8) are described. Values = 0 to 3 in FIG. 5 may correspond to Values = 4 to 7 in this example. Values = 0 to 3 and 8 to 23 in the example are row entries newly added. In other words, the entries of Values = 0 to 3 and 8 to 23 indicate a case that the number of front-load symbols is two. Meanwhile, the entries of Values = 4 to 7 indicate a case that the number of front-load symbols is one.

For two CWs, the entries of Values = 0 to 7 and 12 to 23 may be associated with the number of DMRS CDM groups without data = 2. Meanwhile, the entries of Values = 8 to 11 may be associated with the number of DMRS CDM groups without data = 1.

For two CWs, the entries of Values = 0 to 3 respectively correspond to ranks 5 to 8. Similarly, the entries of Values = 8 to 11 may respectively correspond to ranks 5 to 8, the entries of Values = 12 to 15 may respectively correspond to ranks 5 to 8, the entries of Values = 16 to 19 may respectively correspond to ranks 5 to 8, and the entries of Values = 20 to 23 may respectively correspond to ranks 5 to 8.

For two CWs, with the entries of Values = 8 to 19, distribution (mapping) can be made in a manner that the number of ports is equal or the number of ports has a small difference between a plurality of CDM groups.

For example, when DMRS ports = {0, 1, 4, 5, 8} are indicated in Value = 8, as shown in FIG. 4A, for two CDM groups #0 to be TDMed, DMRS ports = {0, 1, 8} corresponding to TD-OCC #0 and DMRS ports = {4, 5} corresponding to TD-OCC #1 can be distributed.

As described above, between a plurality of CDM groups to be TDMed (between CDM groups having the same index), distribution is made in a manner that the number of ports corresponding to a certain UE is equal or has a small difference. Note that, in the example of Value = 8, the number of ranks is 5, an odd number, and thus the distribution may be made in a manner that the number of ports has a small difference between the plurality of CDM groups to be TDMed. For example, in a case of the number of ranks being 6, an even number, the distribution may be made in a manner that the number of ports is equal between the plurality of CDM groups to be TDMed.

As described above, indication of DMRS ports with the number of ports being equal or having a small difference enables a characteristic improvement effect to be obtained in a case of high-speed movement/high frequency selectivity (in a case where the near-far problem described above is possible to be caused). In high-speed movement, it is assumed that directness of a TD-OCC collapse. In a channel with strong frequency selectivity, it is assumed that directness of an FD-OCC collapse. Indication of DMRS ports with the number of ports being equal or having a small difference enables the FD-OCC and TD-OCC to be applied evenly. In addition, in either case of the high-speed movement or the channel with strong frequency selectivity, it is possible to avoid extreme characteristic deterioration. Furthermore, overhead of DMRSs can be reduced.

For two CWs, the entries of Value = 20 to 23 may not need to be defined (may be deleted).

Variation of {Embodiment 1.2}

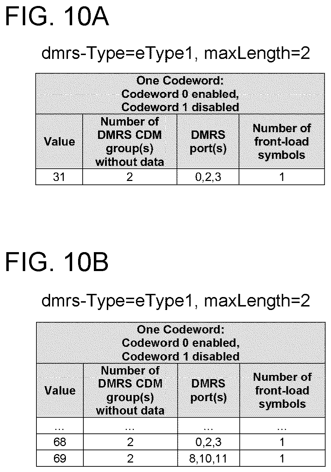

FIGS. 10A and 10B each show a variation of the antenna port table in the case of DMRS type = enhanced type 1 and maximum DMRS length = 2.

In the case of DMRS type = enhanced type 1 and maximum DMRS length = 2, for example, in the table of FIG. 8 described above, the entry with the antenna port field value (Value) = 31 may be defined as shown in FIG. 10A (may be replaced with that of FIG. 10A). In FIG. 10A, the number of DMRS CDM groups without data = 2 may be associated with DMRS ports = {0, 2, 3}/{8, 9, 11}.

For example, in the entries with the antenna port field values (Values) = 9 and 40 of FIG. 7 described above, combinations of DMRS ports = {0, 1, 2} and {8, 9, 10} are supported. This enables indication of 2 + 1 = 3 layers for two CDM groups. Meanwhile, supporting DMRS ports = {0, 2, 3}/{8, 9, 11} in the entry with the antenna port field value (Value) = 31 enables indication of 1 + 2 = 3 layers for two CDM groups.

In the table of FIG. 8 described above, for a case of single-DCI-based multi-TRP, entries with antenna port field values (Values) = 68 and 69 as shown in FIG. 10B may be defined (may be added). In FIG. 10B, in the entry of Value = 68, the number of DMRS CDM groups without data = 2 may be associated with DMRS ports = {0, 2, 3}, and in the entry of Value = 69, the number of DMRS CDM groups without data = 2 may be associated with DMRS ports = {8, 10, 11}. Similarly to the above, supporting DMRS ports = {0, 2, 3}/{8, 9, 11} enables indication of 1 + 2 = 3 layers for two CDM groups.

{Embodiment 1.3}

In Embodiment 1.3, a case of DMRS type = enhanced type 2 and maximum DMRS length = 1 is described. Note that, in Embodiment 1.3, description is omitted on details that may be the same as that in Embodiment 1.1/1.2 (or that may be, for example, controlled/configured/adjusted similarly to Embodiment 1.1/1.2).

In the antenna port table of Embodiment 1.3, a difference in index between the category-1 DMRS port and category-2 DMRS port may be, for example, +12, and the number of CDM groups without data can be any one of 1 to 3. In other words, an offset indicator of Category 2 with respect to Category 1 may be +12.

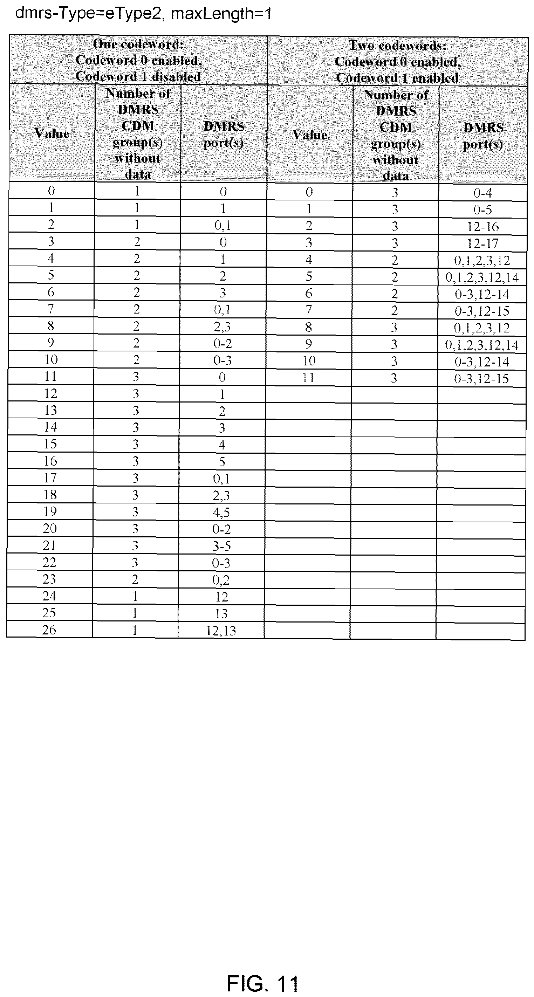

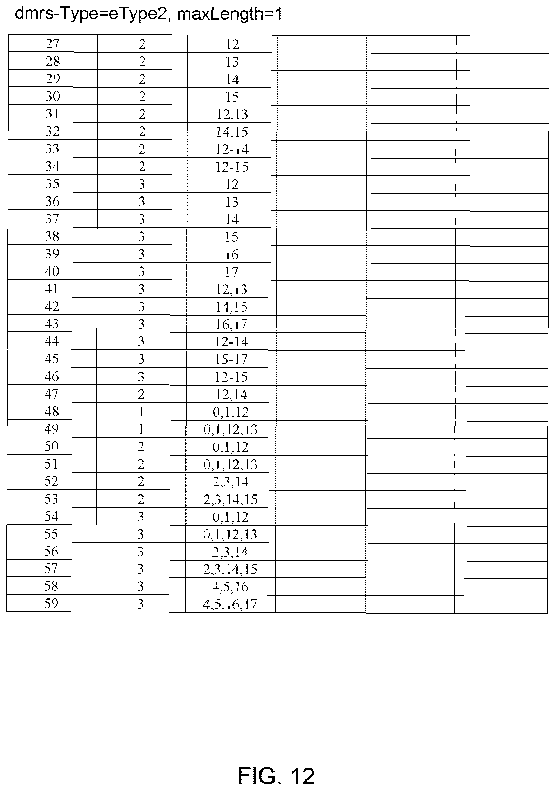

FIGS. 11 and 12 show an example of an antenna port table in the case of DMRS type = enhanced type 2 and maximum DMRS length = 1. Note that the antenna port table according to Embodiment 1.3 is shown across two figures, FIGS. 11 and 12, due to the number of rows. In other words, in the example, in FIGS. 11 and 12, one table is defined with the two figures integrated. More specifically, description will be made assuming that the lowest row (Value = 26) in FIG. 11 is, immediately thereafter, followed by the highest row (Value = 27) in FIG. 12. As described above, the table shown in FIGS. 11 and 12 is only an example, and thus divided tables may be defined depending on a scenario to be applied (single TRP/multi-TRP, or any of Categories 1 to 3).

Firstly, row entries for one CW (the left half of FIGS. 11 and 12) are described. In the antenna port table shown in the example, Values = 0 to 10 for one CW may correspond to Values = 0 to 10 in FIG. 5.

Values = 0 to 23, 24 to 47, and 48 to 59 may correspond to Category 1, Category 2, and Category 3, respectively. Note that, in Category 3, all the combinations for the number of DMRS CDM groups without data = 1 to 3 may be covered or part of the combinations may be omitted. For example, in a case of the number of DMRS CDM groups without data = 1, DMRS port combinations for one CDM group may be defined. In a case of the number of DMRS CDM groups without data = 2, DMRS port combinations for two CDM groups may be defined. In a case of the number of DMRS CDM groups without data = 3, DMRS port combinations for three CDM groups may be defined.

Entries indicated with [] in FIG. 5 may indicate entries corresponding to Values below of this example. The entries indicated with [] may each indicate an antenna port corresponding to multi-TRP/a DMRS port across CDM groups.

Values = 0 to 2 in FIG. 5 may correspond to Values = 0 to 2 in the example. Values = 12 to 14 in FIG. 5 may correspond to Values = 24 to 26 in the example. Values = 24 to 25 in FIG. 5 may correspond to Values = 48 to 49 in the example.

Values = 9 to 10 in FIG. 5 may correspond to Values = 9 to 10 in the example. Values = 21 to 22 in FIG. 5 may correspond to Values = 33 to 34 in the example.

Value = 11 in FIG. 5 may correspond to Value = 23 in the example. Value = 23 in FIG. 5 may correspond to Value = 47 in the example.

The entries of Values = 11 to 22 and 35 to 46 may be associated with the number of DMRS CDM groups without data = 3. The other Values may be associated with the number of DMRS CDM groups without data = 1/2.

For example, in a case where Value = 23 is indicated in an existing specification, no MU-MIMO is applied (other DMRS ports are not used for another UE), and thus Value = 47 may be excluded (deleted).

In a case of a single TRP, from among the entries of Values = 9 to 10, 20 to 22, 33 to 34, and 44 to 46, all/at least one of them may be deleted. This enables overhead of DMRSs to be reduced.

Next, row entries for two CWs (the right half of FIG. 11) are described. For two CWs, Values = 0 to 3 and 8 to 11 in this example may be associated with the number of DMRS CDM groups without data = 3. Values = 4 to 7 in the example may be associated with the number of DMRS CDM groups without data = 2. These row entries may be associated with ranks 5 to 8.

Only either Values = 0 to 3 or 4 to 7 may be defined, or both may be defined. For example, in a case of Values = 0 to 3, the number of DMRS CDM groups without data = 2 enables one CDM group to be FDMed to data by using MU-MIMO, allowing improvement in throughput of a UE. Meanwhile, in a case of Values = 4 to 7, the number of DMRS CDM groups without data = 3 enables one CDM group to be allocated to another UE, allowing improvement in cell capacity.

For two CWs, with the entries of Values = 4 to 11, distribution (mapping) can be made in a manner that the number of boats is equal or the number of ports has a small difference between a plurality of CDM groups.

For example, when DMRS ports = {0, 1, 2, 3, 12} are indicated in Value = 4, as shown in FIG. 4B, for two CDM groups #0 and #1 to be FDMed, DMRS ports = {0, 1, 12} and {2, 3} corresponding to TD-OCC #0 can be distributed.

As described above, between a plurality of CDM groups to be FDMed (between CDM groups having the same index), distribution is made in a manner that the number of ports corresponding to a certain UE is equal or has a small difference. Note that, in the example of Value = 4, the number of ranks is 5, an odd number, and thus the distribution may be made in a manner that the number of ports has a small difference (three and two ports) between the plurality of CDM groups to be FDMed.

For example, when DMRS ports = {0, 1, 2, 3, 12, 14} are indicated in Value = 5, as shown in FIG. 4B, for two CDM groups #0 and #1 to be FDMed, DMRS ports = {0, 1, 12} and {2, 3, 14} corresponding to TD-OCC #0 can be distributed. As described above, in a case of the number of ranks being 6, an even number, distribution may be made in a manner that the number of ports is equal (three ports each) between a plurality of CDM groups to be TDMed.

Variation of {Embodiment 1.3}

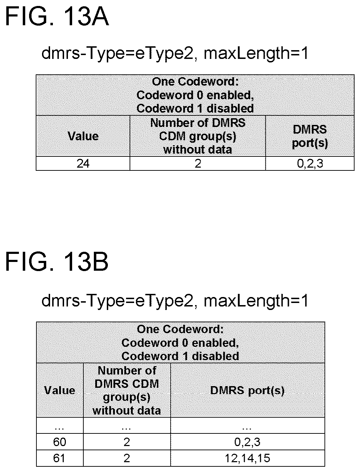

FIGS. 13A and 13B each show a variation of the antenna port table in the case of DMRS type = enhanced type 2 and maximum DMRS length = 1.

In the case of DMRS type = enhanced type 2 and maximum DMRS length = 1, for example, in the table of FIGS. 11 and 12 described above, the entry with the antenna port field value (Value) = 24 may be defined as shown in FIG. 13A (may be replaced with that of FIG. 13A). In FIG. 13A, the number of DMRS CDM groups without data = 2 may be associated with DMRS ports = {0, 2, 3}/{12, 14, 15}.

For example, in the entries with the antenna port field values (Values) = 9 and 33 of FIGS. 11 and 12 described above, combinations of DMRS ports = {0, 1, 2} and {12, 13, 14} are supported. This enables indication of 2 + 1 = 3 layers for two CDM groups. Meanwhile, supporting DMRS ports = {0, 2, 3}/{12, 14, 15} in the entry with the antenna port field value (Value) = 24 enables indication of 1 + 2 = 3 layers for two CDM groups.

In the table of FIGS. 11 and 12 described above, for a case of single-DCI-based multi-TRP, entries with antenna port field values (Values) = 60 and 61 as shown in FIG. 13B may be defined (may be added). In FIG. 13B, in the entry of Value = 60, the number of DMRS CDM groups without data = 2 may be associated with DMRS ports = {0, 2, 3}, and in the entry of Value = 61, the number of DMRS CDM groups without data = 2 may be associated with DMRS ports = {12, 14, 15}. Similarly to the above, supporting DMRS ports = {0, 2, 3}/{12, 14, 15} enables indication of 1 + 2 = 3 layers for two CDM groups.

{Embodiment 1.4}

In Embodiment 1.4, a case of DMRS type = enhanced type 2 and maximum DMRS length = 2 is described. Note that, in Embodiment 1.4, description is omitted on details that may be the same as that in Embodiment 1.1/1.2/1.3 (or that may be, for example, controlled/configured/adjusted similarly to Embodiment 1.1/1.2/1.3).

In the antenna port table of Embodiment 1.4, a DMRS port combination only including category-2 DMRS ports may be included. Such a combination may correspond to a DMRS port combination obtained by having every index made +X (for example, +12), from at least one of the DMRS port combinations only including category-1 DMRS ports described above, for example.

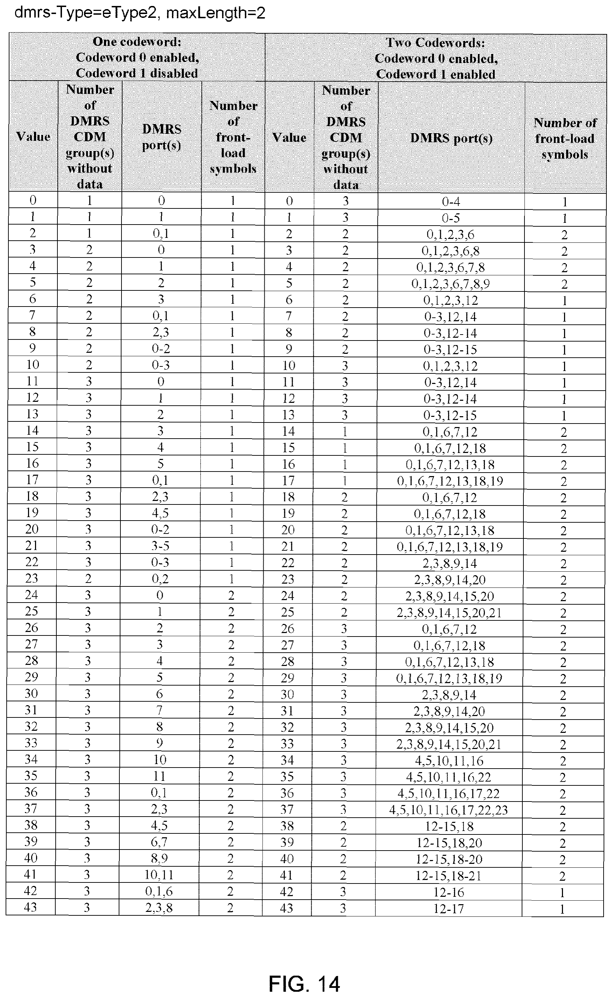

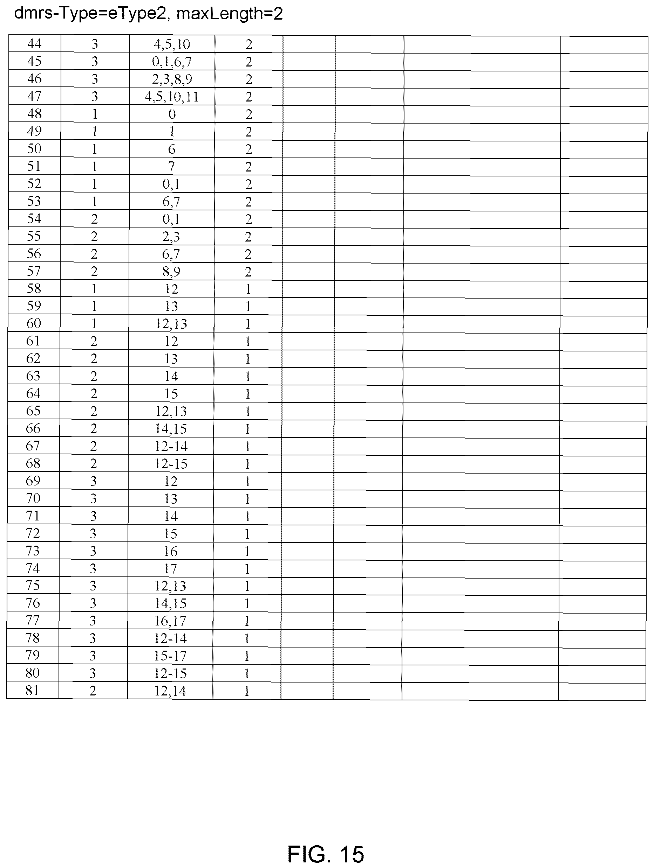

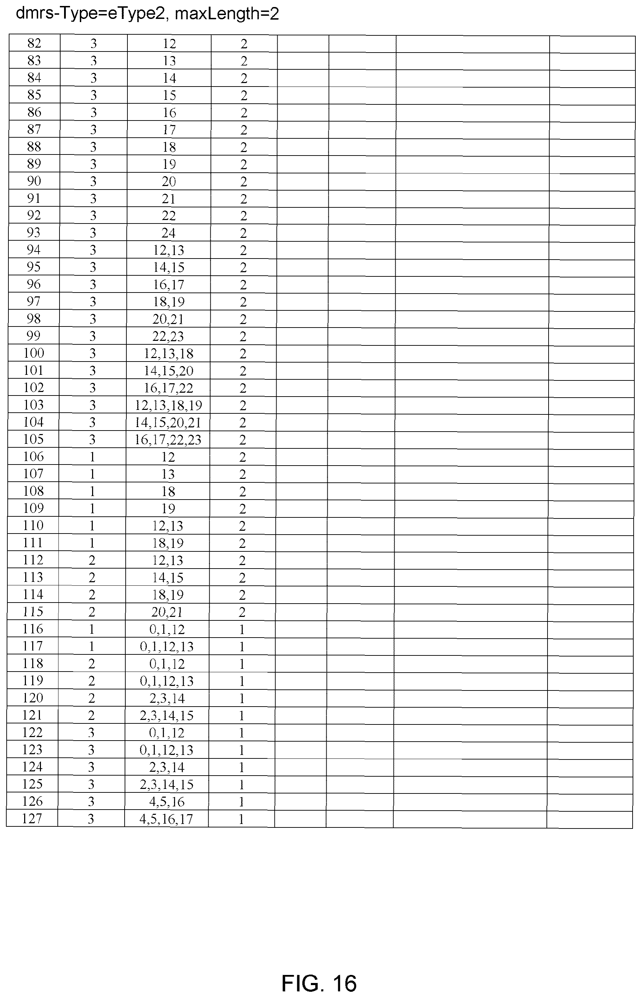

FIGS. 14 to 16 show an example of an antenna port table in the case of DMRS type = enhanced type 2 and maximum DMRS length = 2. Note that the antenna port table according to Embodiment 1.4 is shown across three figures, FIGS. 14 to 16, due to the number of rows. In other words, in the example, in FIGS. 14 to 16, one table is defined with the three figures integrated. More specifically, description will be made assuming that the lowest row (Value = 43) in FIG. 14 is, immediately thereafter, followed by the highest row (Value = 44) in FIG. 15 and the lowest row (Value = 81) in FIG. 15 is, immediately thereafter, followed by the highest row (Value = 82) in FIG. 16. As described above, the table shown in FIGS. 14 to 16 is only an example, and thus divided tables may be defined depending on a scenario to be applied (single TRP/multi-TRP, or any of Categories 1 to 3).

Firstly, row entries for one CW (the left half of FIGS. 14 to 16) are described. In the antenna port table shown in the example, Values = 0 to 10 for one CW may correspond to Values = 0 to 10 in FIG. 3.

Values = 0 to 57, 58 to 115, and 116 to 127 may correspond to Category 1, Category 2, and Category 3, respectively. Note that, in Category 3, all the combinations for the number of DMRS CDM groups without data = 1 to 3 may be covered or part of the combinations may be omitted. For example, in a case of the number of DMRS CDM groups without data = 1, DMRS port combinations for one CDM group may be defined. In a case of the number of DMRS CDM groups without data = 2, DMRS port combinations for two CDM groups may be defined. In a case of the number of DMRS CDM groups without data = 3, DMRS port combinations for three CDM groups may be defined.

Entries indicated with [] in FIG. 5 may indicate entries corresponding to Values below of this example. The entries indicated with [] may each indicate an antenna port corresponding to multi-TRP/a DMRS port across CDM groups.

Values = 0 to 2 in FIG. 5 may correspond to Values = 0 to 2 in the example. Values = 12 to 14 in FIG. 5 may correspond to Values = 58 to 60 in the example. Values = 24 to 25 in FIG. 5 may correspond to Values = 116 to 117 in the example.

Values = 9 to 10 in FIG. 5 may correspond to Values = 9 to 10 in the example. Values = 21 to 22 in FIG. 5 may correspond to Values = 67 to 68 in the example.

For example, in a case where Value = 23 is indicated in an existing specification, no MU-MIMO is applied (other DMRS ports are not used for another UE), and thus Value = 81 may be excluded (deleted).

In a case of a single TRP, from among the entries of Values = 9 to 10, 20 to 22, 42 to 47, 67 to 68, 78 to 80, and 100 to 105, all/at least one of them may be deleted. This enables overhead of DMRSs to be reduced.

Next, row entries for two CWs (the right half of FIG. 14) are described. For two CWs, Values = 0 to 1, 10 to 13, 26, 37, and 42 to 43 in the example may be associated with the number of DMRS CDM groups without data = 3. Values = 2 to 9, 18 to 25, and 38 to 41 in the example may be associated with the number of DMRS CDM groups without data = 2. The other entries (Values = 14 to 17) may be associated with the number of DMRS CDM groups without data = 1. All the row entries for two CWs may be associated with ranks 5 to 8.

For two CWs, the entries of Values = 14 to 37 enables overhead to be reduced in DMRS port combinations using one CDM group.

For two CWs, with the entries of Values = 6 to 13 and 14 to 37, distribution (mapping) can be made in a manner that the number of boats is equal or the number of ports has a small difference between a plurality of CDM groups.

For example, when DMRS ports = {0, 1, 2, 3, 12, 14} are indicated in Value = 7, as shown in FIG. 4B, for two CDM groups #0 and #1 to be FDMed, three ports each can be equally distributed, DMRS ports = {0, 1, 12} and {2, 3, 14} corresponding to TD-OCC #0.

For example, when DMRS ports = {0, 1, 6, 7, 12, 18} are indicated in Value = 15, as shown in FIG. 4B, for two CDM groups #0 to be TDMed, three ports each can be equally distributed, DMRS ports = {0, 1, 12} corresponding to TD-OCC #0 and DMRS ports = {6, 7, 18} corresponding to TD-OCC #1.

For example, when DMRS ports = {2, 3, 8, 9, 14, 20} are indicated in Value = 23, as shown in FIG. 4B, for two CDM groups #1 to be TDMed, three ports each can be equally distributed, DMRS ports = {2, 3, 14} corresponding to TD-OCC #0 and DMRS ports = {8, 9, 20} corresponding to TD-OCC #1.

As described above, in a case of the number of ranks being 6, an even number, distribution may be made in a manner that the number of ports is equal (three ports each) between a plurality of CDM groups to be TDMed.

For example, when DMRS ports = {0, 1, 6, 7, 12} are indicated in Value = 14, as shown in FIG. 4B, for two CDM groups #0 to be TDMed, DMRS ports = {0, 1, 12} and {6, 7} corresponding to TD-OCC #0 can be distributed.

As described above, between a plurality of CDM groups to be TDMed (between CDM groups having the same index), distribution is made in a manner that the number of ports corresponding to a certain UE is equal or has a small difference. Note that, in the example of Value = 14, the number of ranks is 5, an odd number, and thus the distribution may be made in a manner that the number of ports has a small difference (three and two ports) between the plurality of CDM groups to be TDMed.

In addition, from among the entries of Values = 38 to 43, all/at least one of them may be deleted. This enables overhead of DMRSs to be reduced.

Variation of {Embodiment 1.4}

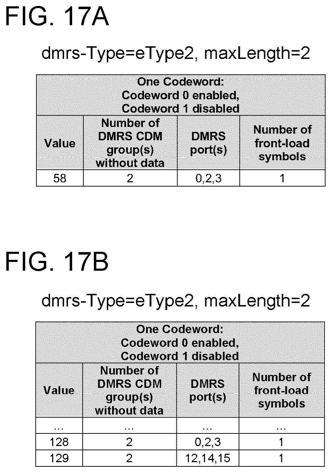

FIGS. 17A and 17B each show a variation of the antenna port table in the case of DMRS type = enhanced type 2 and maximum DMRS length = 2.

In the case of DMRS type = enhanced type 2 and maximum DMRS length = 2, for example, in the table of FIGS. 14 to 16 described above, the entry with the antenna port field value (Value) = 58 may be defined as shown in FIG. 17A (may be replaced with that of FIG. 17A). In FIG. 17A, the number of DMRS CDM groups without data = 2 may be associated with DMRS ports = {0, 2, 3}/{12, 14, 15}.

For example, in the entries with the antenna port field values (Values) = 9 and 67 of FIGS. 14 to 16 described above, combinations of DMRS ports = {0, 1, 2} and {12, 13, 14} are supported. This enables indication of 2 + 1 = 3 layers for two CDM groups. Meanwhile, supporting DMRS ports = {0, 2, 3}/{12, 14, 15} in the entry with the antenna port field value (Value) = 58 enables indication of 1 + 2 = 3 layers for two CDM groups.

In the table of FIGS. 14 to 16 described above, for a case of single-DCI-based multi-TRP, entries with antenna port field values (Values) = 128 and 129 as shown in FIG. 17B may be defined (may be added). In FIG. 17B, in the entry of Value = 128, the number of DMRS CDM groups without data = 2 may be associated with DMRS ports = {0, 2, 3}, and in the entry of Value = 129, the number of DMRS CDM groups without data = 2 may be associated with DMRS ports = {12, 14, 15}. Similarly to the above, supporting DMRS ports = {0, 2, 3}/{12, 14, 15} enables indication of 1 + 2 = 3 layers for two CDM groups.

<Variation>

In the first embodiment, as described in Embodiment 1.1 to Embodiment 1.4, the number of entries included in an antenna port table and an antenna port field for indication of DMRS ports can be enormous. Thus, DMRS ports may be indicated based not only on the antenna port field but also on other information.

For example, DMRS ports may be indicated using both a CDM group subset and the antenna port field. Here, a CDM group subset may be a component lower than a CDM group. One CDM group may include a plurality of CDM group subsets. A CDM group subset may be configured, associated with a PDSCH/PUSCH, for a UE by a higher layer parameter (for example, RRC signaling or MAC CE), or may be specified by DCI that schedules the PDSCH/PUSCH. A CDM group subset may be identified by a CDM group subset ID.

For each group subset, an order of CDM groups in an antenna port table may be reused. For example, in a case where an antenna port table indicates DMRS port index j for a first group subset, for a second group subset, a table may be used that has DMRS port index j in a DMRS port table replaced with j + P. Here, P may represent the number of DMRS ports in a group subset (the maximum number of DMRS ports in a group subset).

In the first embodiment, for Category 1/2/3, all of them may be defined in an antenna port table, or only part of them may be defined.

For example, decrease in size of an antenna port field may be configured for a UE by a higher layer parameter. Such decrease in size of an antenna port field allows reduction in overhead of DCI to be expected.

Note that, when a higher layer parameter indicating decrease in size of an antenna port field in DCI as compared with a Rel-17 NR specification is configured for a UE, a table may be used that has one or more combinations of DMRS ports selected from a specific antenna port table (for example, an antenna port table for a case where a higher layer parameter indicating increase in size of an antenna port field in DCI as compared with a Rel-17 NR specification is configured), on the basis of RRC configuration or a predetermined rule.

From the antenna port table described above, a row indicatable by DCI (for example, DCI format 1_1/1_2) may be indicated/configured/limited by RRC/MAC CE. Certain DMRS ports may be indicated based on rules that differ between DCI format 1_1 and DCI format 1_2. For example, DCI format 1_1 may indicate a row indicatable from a table and DCI format 1_2 may indicate a row deletable/omittable. This enables overhead of DCI to be reduced.

For example, DMRS ports may be indicated in bitmaps (one bit or a plurality of bits) of rows in an antenna port table or in units of subsets obtained by group-subsetting (which may be simply referred to as grouping) the rows as described above. A rule for such grouping may be defined in a specification in advance and may be per certain number of rows/per category/per number of ranks /per number of DMRS CDM groups without data in the table described above or the like. A plurality of rows may be grouped, and an indicatable DMRS port may be indicated for each group by using DCI. This enables overhead of RRC/MAC CE to be reduced.

Rows that can be indicated/configured/limited by using RRC/MAC CE may be limited to part of the rows in a table. In other words, rows other than these limited rows may be indicatable by using DCI. Rows indicatable by DCI per subset (group including a plurality of rows) described above may be indicated/configured/limited by using RRC/MAC CE.

According to the first embodiment described above, a UE can appropriately judge a Rel-18 PDSCH DMRS port to be used.

<Second Embodiment>

A second embodiment relates to an MU-MIMO scheduling restriction.

For example, in Rel. 15, regarding MU-MIMO scheduling, a limitation prescription (restriction) as below is provided.

For example, in a case of DMRS type = type 1/type 2, when a UE is scheduled with one CW and is assigned antenna port mapping with a specific index in an existing antenna port table, or the UE is scheduled with two CWs, the UE may assume that the rest of orthogonal antenna ports are not associated with transmission of a PDSCH to another UE.

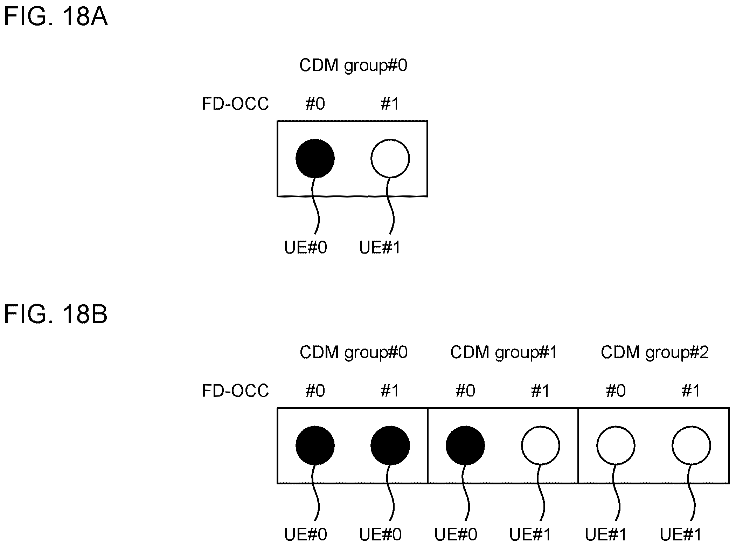

FIGS. 18A and 18B are each a diagram to show an example of association between CDM groups, DMRS ports between a plurality of UEs, and OCCs, for DMRS type = type 1/type 2.

For example, in an existing specification, as shown in FIG. 18A (type 1)/FIG. 18B (type 2), MU-MIMO is allowed based on existing DMRS port combinations.

FIG. 18A shows an example where MU-MIMO is allowed for two UEs (UE #0/UE #1) corresponding to rank 1 in the same CDM group.

FIG. 18B shows an example where MU-MIMO is allowed for two UEs (UE #0/UE #1) corresponding to rank 3 between a plurality of CDM groups #0 to #2. Specifically, DMRS ports for UE #0 are mapped across CDM groups #0 and #1, and DMRS ports for UE #1 are mapped across CDM groups #1 and #2.

As described above, in an existing specification, MU-MIMO between different UEs is allowed within the same CDM group/across a plurality of CDM groups.

In a case of enhanced type described above, how to define an MU-MIMO scheduling restriction is not clear.

In view of this, application of an MU-MIMO scheduling restriction also to the enhanced type described above is studied. Hereinafter, an MU-MIMO scheduling restriction will be described taking each antenna port table described above as an example. Embodiment 2.1 to Embodiment 2.4 to be described below correspond to Embodiment 1.1 to Embodiment 1.4 described above, respectively.

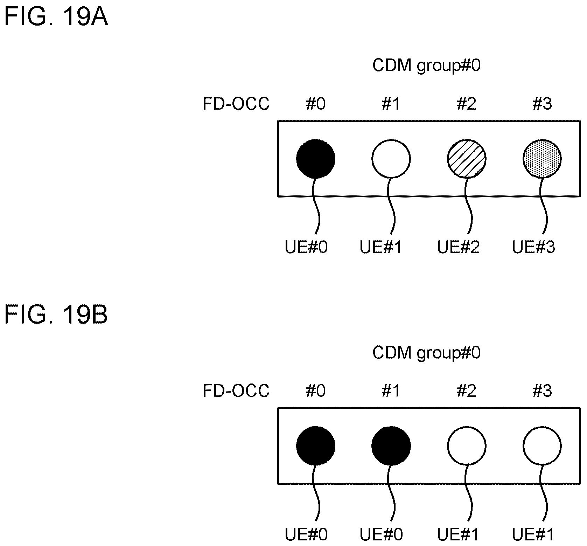

FIGS. 19A and 19B are each a diagram to show an example of association between CDM groups, DMRS ports between a plurality of UEs, and OCCs, for DMRS type = enhanced type 1/enhanced type 2.

For example, in Rel. 18 or later versions, four DMRS ports can exist in a certain CDM group. As shown in FIG. 19A, it is preferable that, in one CDM group #0, MU-MIMO be allowed for four UEs (UEs #0 to #3) corresponding to rank 1. As shown in FIG. 19B, it is preferable that, in one CDM group #0, MU-MIMO be allowed for two UEs (UEs #0 and #1) corresponding to rank 2.

In this example, for support of examples described above, within one CDM group/between a plurality of CDM groups, an MU-MIMO scheduling restriction between a plurality of DMRS ports for enhanced type 1/enhanced type 2 is described.

For example, in a case of DMRS type = enhanced type 1/enhanced type 2, when a UE is scheduled with one CW and is assigned antenna port mapping with a specific index in a new antenna port table (each antenna port table described above), the UE may assume that all the rest of orthogonal antenna ports are not associated with transmission of a PDSCH to another UE.

Here, the specific index in the new antenna port table may correspond to an entry of a row index indicated with a condition to be described below. In other words, based on a certain condition, the assuming by the UE as described above may be interpreted as an MU-MIMO scheduling restriction.

Furthermore, "all the rest of orthogonal antenna ports" described above may mean DMRS ports in the same CDM group (one CDM group) (within a CDM group), or may mean DMRS ports in a plurality of CDM groups (within CDM groups).

For two CWs, such an MU-MIMO scheduling restriction may or may not be applied.

In a case of applying DMRS type = enhanced type 1/enhanced type 2, a UE may control the scheduling restriction described above (whether to perform the assuming described above), based on enhanced type classification (enhanced type 1/enhanced type 2), maximum DMRS length (1/2), whether to apply single-DCI-based multi-TRP, and the number of CWs (one CW/two CWs).

For example, in a row (Value) that the following DMRS port combination is indicated, a UE may assume that the rest of DMRS ports within the same CDM group/in a plurality of CDM groups are not used for another UE.

- All the DMRS ports in a CDM group are already allocated to a certain UE (for example, enhanced-type-1 DMRS ports = {0, 1, 8, 9}, enhanced-type-2 DMRS ports = {0, 1, 12, 13})
- DMRS ports corresponding to two CWs (the right side of each antenna port table (corresponding to ranks 5 to 8))
- Three DMRS ports in a CDM group are allocated to a certain UE (for example, enhanced-type-1 DMRS ports = {0, 1, 8}, enhanced-type-2 DMRS ports = {0, 1, 12})

Hereinafter, in Embodiment 2.1 to Embodiment 2.4, each case will be described.

{Embodiment 2.1}

In Embodiment 2.1, a case of DMRS type = enhanced type 1 and maximum DMRS length = 1 is described.
In the antenna port tables shown in FIGS. 5 to 7 described above, when at least one of the rows described below (Conditions 1 to 4) is indicated, a UE may apply an MU-MIMO scheduling restriction. In other words, the UE may assume that other DMRS ports are not allocated to another UE.

<Condition 1>

(Values = 9, 10, 21, 22, 30, and 31)

These row indices are examples that three/four ports are allocated across two CDM groups.

<Condition 2>

(Values = 11 and 23)

These row indices are examples that two ports are allocated across two CDM groups. In this case, for a UE, channel estimation is possible by recognizing that MU-MIMO is not applied, without taking account of any FD-OCC. Especially in a case of strong frequency selectivity, both a UE processing load reduction effect and a characteristic improvement effect may be expected (since no FD-OCC is substantially used).

<Condition 3>

(Values = 24 to 29)

These row indices are examples that three/four ports are allocated in one CDM group.

- When "all the rest of orthogonal antenna ports" described above means DMRS ports in the same CDM group (one CDM group) (within a CDM group), allocation of four ports brings additional multiplexing within the same CDM group physically impossible. Thus, the restriction is necessary.
- When "all the rest of orthogonal antenna ports" described above means DMRS ports in a plurality of CDM groups (within CDM groups), additional multiplexing in the plurality of CDM groups is possible. Thus, the restriction may or may not be applied.

<Condition 4>

(Values = 0 to 3 (Corresponding to Right Half of Antenna Port Table) for Two CWs)

For a case of two CWs, with respect to another UE, allocation of any available DMRS port may or may not be prohibited.

{Embodiment 2.2}

In Embodiment 2.2, a case of DMRS type = enhanced type 1 and maximum DMRS length = 2 is described. Note that, in Embodiment 2.2, description is omitted on details that may be the same as that in Embodiment 2.1 (or that may be, for example, controlled/configured/adjusted similarly to Embodiment 2.1).
In the antenna port tables shown in FIGS. 8 to 10 described above, when at least one of the rows described below (Conditions 1 to 4) is indicated, a UE may apply an MU-MIMO scheduling restriction. In other words, the UE may assume that other DMRS ports are not allocated to another UE.

<Condition 1>

(Values = 9, 10, 26 to 30, 40 to 41, 57 to 61, 68, and 69)

These row indices are examples that three/four ports are allocated across two CDM groups.

<Condition 2>

(Values = 11 and 42)

These row indices are examples that two ports are allocated across two CDM groups. In this case, for a UE, channel estimation is possible by recognizing that MU-MIMO is not applied, without taking account of any FD-OCC. Especially in a case of strong frequency selectivity, both a UE processing load reduction effect and a characteristic improvement effect may be expected (since no FD-OCC is substantially used).

<Condition 3>

(Values = 62 to 67)

These row indices are examples that three/four ports are allocated in one CDM group.

- When "all the rest of orthogonal antenna ports" described above means DMRS ports in the same CDM group (one CDM group) (within a CDM group), allocation of four ports brings additional multiplexing within the same CDM group physically impossible. Thus, the restriction is necessary.
- When "all the rest of orthogonal antenna ports" described above means DMRS ports in a plurality of CDM groups (within CDM groups), additional multiplexing in the plurality of CDM groups is possible. Thus, the restriction may or may not be applied.

<Condition 4>

(Values = 0 to 23 (Corresponding to Right Half of Antenna Port Table) for Two CWs)

For a case of two CWs, with respect to another UE, allocation of any available DMRS port may or may not be prohibited.

{Embodiment 2.3}

In Embodiment 2.3, a case of DMRS type = enhanced type 2 and maximum DMRS length = 1 is described. Note that, in Embodiment 2.3, description is omitted on details that may be the same as that in Embodiment 2.1 to Embodiment 2.2 (or that may be, for example, controlled/configured/adjusted similarly to Embodiment 2.1 to Embodiment 2.2).
In the antenna port tables shown in FIGS. 11 to 13 described above, when at least one of the rows described below (Conditions 1 to 4) is indicated, a UE may apply an MU-MIMO scheduling restriction. In other words, the UE may assume that other DMRS ports are not allocated to another UE.

<Condition 1>

(Values = 9, 10, 20 to 22, 33 to 34, 44 to 46, 60, and 61)

These row indices are examples that three/four ports are allocated across two CDM groups. Note that Values = 10 and 34 may be excluded from the restriction.

<Condition 2>

(Values = 23 and 47)

These row indices are examples that two ports are allocated across two CDM groups. In this case, for a UE, channel estimation is possible by recognizing that MU-MIMO is not applied, without taking account of any FD-OCC. Especially in a case of strong frequency selectivity, both a UE processing load reduction effect and a characteristic improvement effect may be expected (since no FD-OCC is substantially used).

<Condition 3>

(Values = 48 to 59)

These row indices are examples that three/four ports are allocated in one CDM group.

- When "all the rest of orthogonal antenna ports" described above means DMRS ports in the same CDM group (one CDM group) (within a CDM group), allocation of four ports brings additional multiplexing within the same CDM group physically impossible. Thus, the restriction is necessary.
- When "all the rest of orthogonal antenna ports" described above means DMRS ports in a plurality of CDM groups (within CDM groups), additional multiplexing in the plurality of CDM groups is possible. Thus, the restriction may or may not be applied.

<Condition 4>

(Values = 0 to 11 (Corresponding to Right Half of Antenna Port Table) for Two CWs)

For a case of two CWs, with respect to another UE, allocation of any available DMRS port may or may not be prohibited.

{Embodiment 2.4}

In Embodiment 2.4, a case of DMRS type = enhanced type 2 and maximum DMRS length = 2 is described. Note that, in Embodiment 2.4, description is omitted on details that may be the same as that in Embodiment 2.1 to Embodiment 2.3 (or that may be, for example, controlled/configured/adjusted similarly to Embodiment 2.1 to Embodiment 2.3).
In the antenna port tables shown in FIGS. 14 to 17 described above, when at least one of the rows described below (Conditions 1 to 4) is indicated, a UE may apply an MU-MIMO scheduling restriction. In other words, the UE may assume that other DMRS ports are not allocated to another UE.

<Condition 1>

(Values = 9, 10, 20 to 22, 42 to 47, 67 to 68, 78 to 80, 100 to 105, and 128 to 129)

These row indices are examples that three/four ports are allocated across two CDM groups. Note that Value = 10 may be excluded from the restriction.

<Condition 2>

(Values = 23 and 81)

These row indices are examples that two ports are allocated across two CDM groups. In this case, for a UE, channel estimation is possible by recognizing that MU-MIMO is not applied, without taking account of any FD-OCC. Especially in a case of strong frequency selectivity, both a UE processing load reduction effect and a characteristic improvement effect may be expected (since no FD-OCC is substantially used).

<Condition 3>

(Values = 116 to 127)

These row indices are examples that three/four ports are allocated in one CDM group.

- When "all the rest of orthogonal antenna ports" described above means DMRS ports in the same CDM group (one CDM group) (within a CDM group), allocation of four ports brings additional multiplexing within the same CDM group physically impossible. Thus, the restriction is necessary.
- When "all the rest of orthogonal antenna ports" described above means DMRS ports in a plurality of CDM groups (within CDM groups), additional multiplexing in the plurality of CDM groups is possible. Thus, the restriction may or may not be applied.

<Condition 4>

(Values = 0 to 43 (Corresponding to Right Half of Antenna Port Table) for Two CWs)

For a case of two CWs, with respect to another UE, allocation of any available DMRS port may or may not be prohibited.

<Variation 1>

As described in each embodiment above, when two CWs are indicated, the restriction may or may not be applied.
For a CDM group that DMRS ports corresponding to two CWs are mapped to, the restriction described above may be applied. Meanwhile, for a separate CDM group (a CDM group that DMRS ports for two CWs are not mapped to) different from the CDM group, the restriction described above may not need to be applied. For example, this case corresponds to rows associated with a case that two CDM groups are applied in enhanced type 2 and the number of DMRS CDM groups without data = 3.
Furthermore, in accordance with the total number of MIMO layers that a UE can process, the maximum number of UEs that can be multiplexed in MU-MIMO may be limited. For example, with 4 layers at maximum, when three DMRS ports are indicated to a UE itself, it may be allowed, in the same/different CDM group(s), that one DMRS port is additionally allocated to another UE. In this case, in the same/different CDM group(s), it may not need to be allowed that two or more DMRS ports are additionally allocated to such another UE.
A reason for this is that, when a UE receives a PDSCH by using MU-MIMO, the number of MIMO degrees (number of layers) to be processed by the UE is assumed to be limited. Note that the total number of MIMO layers that a UE can process may be defined in a specification, may be configured by a higher layer, or may be reported with UE capability. These values may be configured/defined/reported per BWP/CC/Band/Frequency range.

<Variation 2>

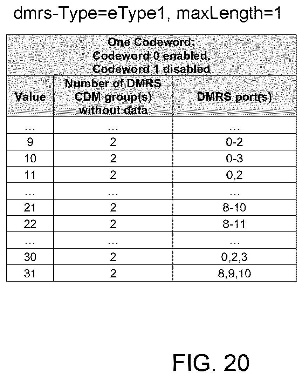

FIG. 20 shows a variation of the antenna port table in the case of DMRS type = enhanced type 1 and maximum DMRS length = 1.
For example, between an antenna port table for single-DCI-based multi-TRP and an antenna port table other than this, whether an MU-MIMO scheduling restriction is applicable may be different from each other, even when the same DMRS port combination is indicated. An example for this will be described, with reference to the antenna port table shown in FIG. 20, for example. The row entries shown in FIG. 20 represent an example useful for a case of applying single-based multi-TRP.
In FIG. 20, the following is shown.

Value = 9 corresponds to 2 + 1 = 3 layers.
Value = 10 corresponds to 2 + 2 = 4 layers.
Value = 11 corresponds to 1 + 1 = 2 layers.
Value = 21 corresponds to 2 + 1 = 3 layers.
Value = 22 corresponds to 2 + 2 = 4 layers.
Value = 30 corresponds to 1 + 2 = 3 layers.
Value = 31 corresponds to 1 + 2 = 3 layers.

Note that Values = 30 and 31 may be, as described above, row entries applied only to a case of single-DCI-based multi-TRP.
As described above, for the case of single-DCI-based multi-TRP, in order to avoid the near-far problem described above (for example, characteristic deterioration in a certain CDM group caused by a received power difference between a plurality of TRPs), DMRS port allocation is made in a manner that the respective TRPs use different CDM groups. Thus, it is preferable that MU-MIMO be not applied even in a case of the same CDM group. A reason for this is that, when DMRS ports in the same CDM group are transmitted from separate TRPs between UEs, the near-far problem described above may be caused. Therefore, for the case of single-DCI-based multi-TRP, when a row entry shown in FIG. 20 is indicated, the restriction described above may be applied.
In contrast, in a case of not applying single-DCI-based multi-TRP (especially in a case of a single TRP), the near-far problem described above between DMRSs is not caused. Thus, even when different UEs are multiplexed to the same CDM group, the effect may be small. Therefore, for the case of not applying single-DCI-based multi-TRP, when a row entry shown in FIG. 20 is indicated, the restriction described above may not need to be applied.

For example, in Value = 11 of FIG. 20, it is considered that application of an MU-MIMO scheduling restriction irrespective of multi-TRP is more beneficial from the viewpoint of characteristics and UE processing load. Thus, the restriction may be applied.

According to the second embodiment described above, a UE can appropriately control application of an MU-MIMO operation.

<Supplements>

{Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or any combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

{Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or any combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

{Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported specific UE capability or that supports the specific UE capability.

The specific UE capability may indicate at least one of the following:

- supporting specific processing/operation/control/information for at least one of the above-described embodiments;

  - supporting, for a PDSCH/PUSCH, the number of DMRS ports greater than that of an existing specification;
  - supporting the number of DMRS ports greater than that of an existing specification by using a TD-OCC/FD-OCC/FDM for a DMRS of a PDSCH/PUSCH;
  - supporting an FD OCC having a length of 4/6;
  - supporting category 1/2/3 (category-1/2/3 DMRS port, category-1/2/3 DMRS port combination); and
  - supporting a restriction for MU-MIMO.

The specific UE capability may be capability applied over all the frequencies (commonly irrespective of frequency), capability per frequency (for example, one or any combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of functions for the respective embodiments, any RRC parameter for a specific release (for example, Rel. 18/19), or the like.

In a case where the UE does not support at least one of the specific UE capability or is not configured with the specific information, the UE may apply, for example, Rel-15/16 operation.

(Supplementary Note)

Regarding one embodiment of the present disclosure, the following supplementary notes of the invention will be given.

{Supplementary Note 1}

A terminal including:

a receiving section that receives, when combinations of category-1 demodulation reference signal (DMRS) ports and category-2 DMRS ports in at least one code division multiplexing (CDM) group are supported, downlink control information (DCI) that indicates the combinations and that schedules a shared channel for one or two codewords; and a control section that controls, based on the combinations, transmission or reception of the shared channel, wherein the combinations further include a combination of category-3 DMRS ports and include an entry indicating at least one of DMRS ports across the CDM groups and DMRS ports corresponding to a plurality of transmission/reception points.

{Supplementary Note 2}

The terminal according to supplementary note 1, wherein the combinations include a plurality of DMRS ports for each of a plurality of CDM groups.

{Supplementary Note 3}

The terminal according to supplementary note 1 or 2, wherein the combinations are distributed in a manner that the number of DMRS ports is equal or has a small difference between a plurality of CDM groups corresponding to two codewords.

{Supplementary Note 4}

The terminal according to any one of supplementary notes 1 to 3, wherein the combinations are defined per DMRS type or maximum DMRS length.

(Supplementary Note)

Regarding one embodiment of the present disclosure, the following supplementary notes of the invention will be given.

{Supplementary Note 1}

A terminal including:

a receiving section that receives, when combinations of category-1 demodulation reference signal (DMRS) ports and category-2 DMRS ports in at least one code division multiplexing (CDM) group are supported, downlink control information (DCI) that indicates the combinations and that schedules a shared channel for one or two codewords; and a control section that controls, based on the combinations, transmission or reception of the shared channel, wherein the combinations include an entry indicating at least one of a DMRS port across the CDM group and a DMRS port corresponding to a plurality of transmission/reception points, and

the control section controls, when specific DMRS port mapping is assigned based on the combinations, a scheduling restriction for multi-user multi-input multi-output (Multi User Multi Input Multi Output (MU-MIMO)).

{Supplementary Note 2}

The terminal according to supplementary note 1, wherein the scheduling restriction is that orthogonal antenna ports in a certain CDM group are assumed not to be associated with transmission of the shared channel to another terminal.

{Supplementary Note 3}

The terminal according to supplementary note 1 or 2, wherein the control section controls the scheduling restriction, based on any of DMRS type, maximum DMRS length, application of single-DCI-based multi-transmission/reception point (TRP), and the number of codewords.

{Supplementary Note 4}

The terminal according to any one of supplementary notes 1 to 3, wherein the control section does not apply, when a specific DMRS port is configured, the scheduling restriction for the specific DMRS port or another DMRS port.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

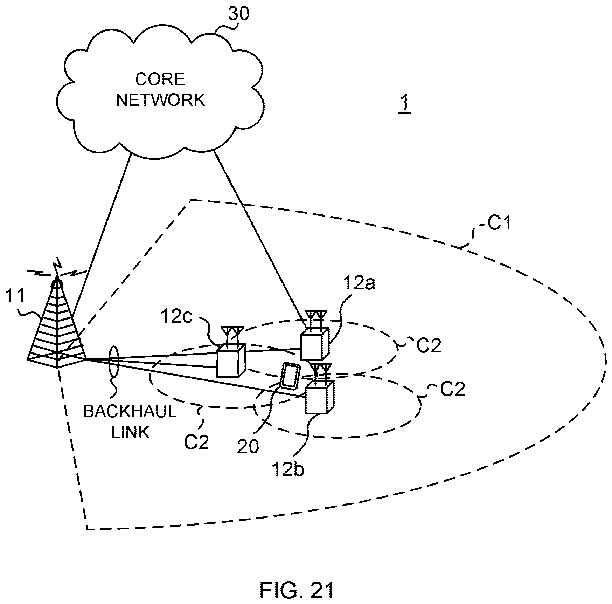

FIG. 21 is a diagram to show an example of a schematic structure of the radio communication system according to one embodiment. The radio communication system 1 (which may be simply referred to as system 1) may be a system implementing communication using Long Term Evolution (LTE), 5th generation mobile communication system New Radio (5G NR), and the like the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface, or the like) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the

DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

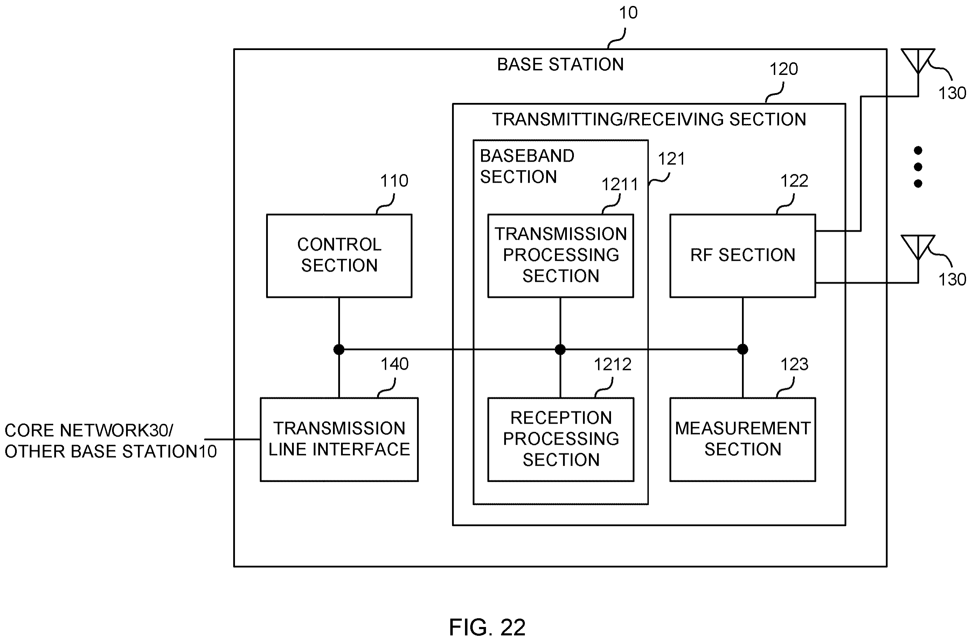

FIG. 22 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

When the user terminal 20 supports combinations of category-1 demodulation reference signal (DMRS) ports and category-2 DMRS ports in at least one code division multiplexing (CDM) group, the transmitting/receiving section 120 may transmit, to the user terminal 20, downlink control information (DCI) that indicates the combinations and that schedules a shared channel for one or two codewords.

The control section 110 may control reception or transmission of the shared channel. The control section 110 may control, when specific DMRS port mapping is assigned based on the combinations, a scheduling restriction for multi-user multi-input multi-output (MU-MIMO). The scheduling restriction is that orthogonal antenna ports in a certain CDM group are assumed not to be associated with transmission of the shared channel to another terminal. The control section 110 may control the scheduling restriction, based on any of DMRS type, maximum DMRS length, application of single-DCI-based multi-transmission/reception point (TRP), and the number of codewords. The control section 110 does not apply, when a specific DMRS port is configured, the scheduling restriction for the specific DMRS port or another DMRS port.

(User Terminal)

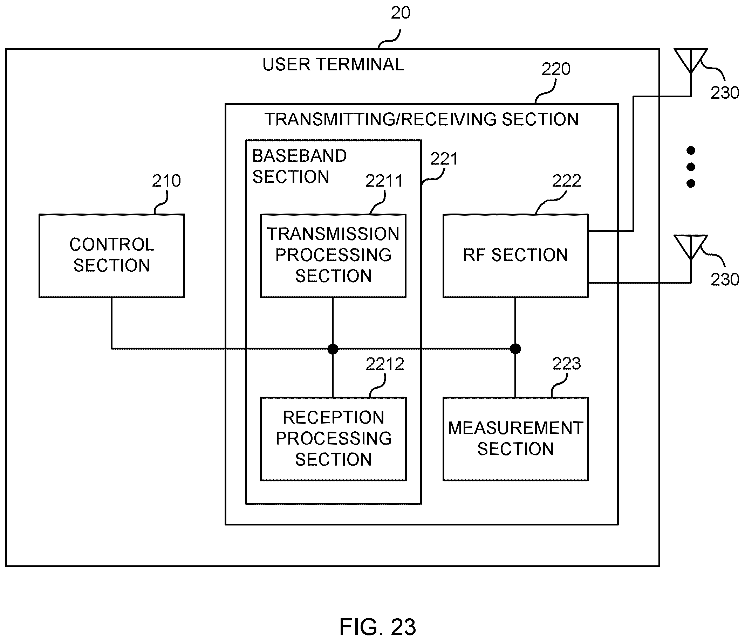

FIG. 23 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive, based on a channel measurement resource, channel measurement for CSI calculation. The channel measurement resource may be, for example, a non-zero-power (Non Zero Power (NZP)) CSI-RS resource. The measurement section 223 may derive, based on an interference measurement resource, interference measurement for CSI calculation. The interference measurement resource may be at least one of an NZP CSI-RS resource for interference measurement, a CSI-interference measurement (IM) resource, and the like. Note that the CSI-IM may be referred to as CSI-interference measurement (IM) and that the CSI-IM and a zero-power (Zero Power (ZP)) CSI-RS may be interchangeably interpreted. Note that, in the present disclosure, a CSI-RS, an NZP CSI-RS, a ZP CSI-RS, CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive, when combinations of category-1 demodulation reference signal (DMRS) ports and category-2 DMRS ports in at least one code division multiplexing (CDM) group are supported, downlink control information (DCI) that indicates the combinations and that schedules a shared channel (for example, PDSCH/PUSCH) for one or two codewords. The control section 210 may control, based on the combinations, transmission or reception of the shared channel. The combinations further include a combination of category-3 DMRS ports and include an entry indicating at least one of a DMRS port across the CDM group and a DMRS port corresponding to a plurality of transmission/reception points. The combinations include a plurality of DMRS ports for each of a plurality of CDM groups. The combinations are distributed in a manner that the number of DMRS ports is equal or has a small difference between a plurality of CDM groups corresponding to two codewords. The combinations are defined per DMRS type or maximum DMRS length.

The control section 210 may control, when specific DMRS port mapping is assigned based on the combinations, a scheduling restriction for multi-user multi-input multi-output (MU-MIMO). The scheduling restriction is that orthogonal antenna ports in a certain CDM group are assumed not to be associated with transmission of the shared channel to another terminal. The control section 210 may control the scheduling restriction, based on any of DMRS type, maximum DMRS length, application of single-DCI-based multi-transmission/reception point (TRP), and the number of codewords. The control section 210 does not apply, when a specific DMRS port is configured, the scheduling restriction for the specific DMRS port or another DMRS port.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

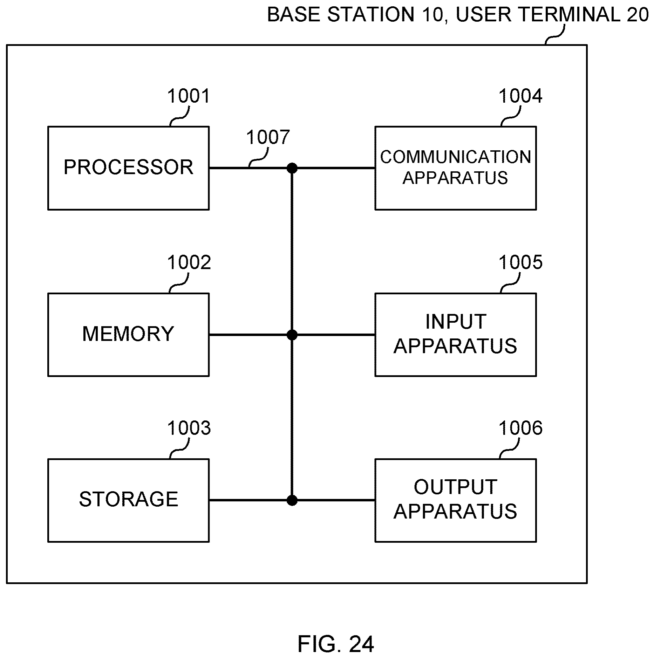

For example, a base station, a user terminal, and so on according to one embodiment of the present disclosure may function as a computer that executes the processes of the radio communication method of the present disclosure. FIG. 24 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

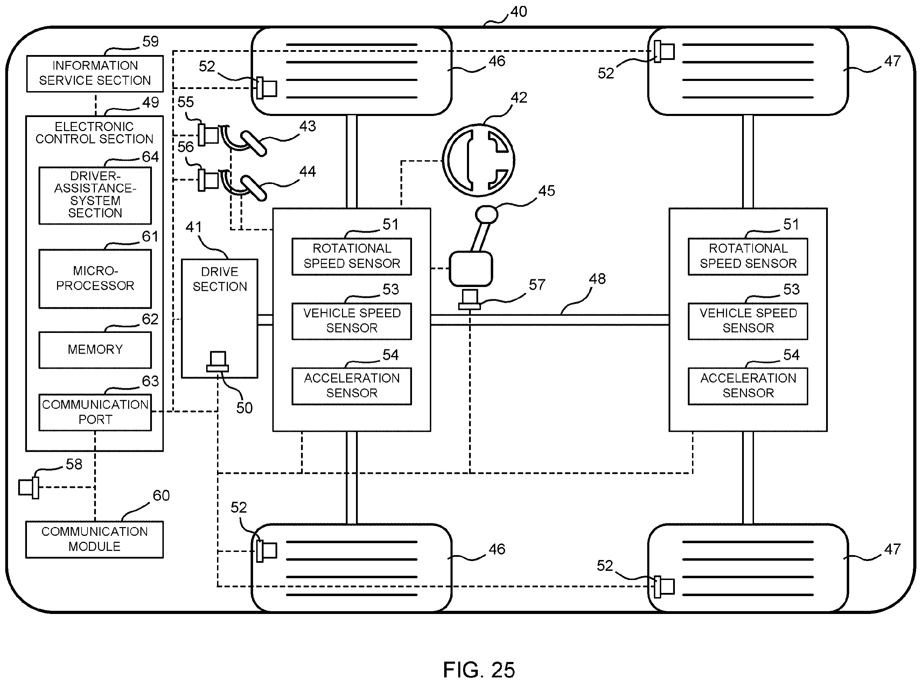

FIG. 25 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, intervehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

**Claims**

1.  A terminal comprising:

    a receiving section that receives, when combinations of category-1 demodulation reference signal (DMRS) ports and category-2 DMRS ports in at least one code division multiplexing (CDM) group are supported, downlink control information (DCI) that indicates the combinations and that schedules a shared channel for one or two codewords; and
    a control section that controls, based on the combinations, transmission or reception of the shared channel, wherein
    the combinations further include a combination of category-3 DMRS ports and include an entry indicating at least one of DMRS ports across the CDM groups and DMRS ports corresponding to a plurality of transmission/reception points.

2.  The terminal according to claim 1, wherein
    the combinations include a plurality of DMRS ports for each of a plurality of CDM groups.

3.  The terminal according to claim 1, wherein
    the combinations are distributed in a manner that the number of DMRS ports is equal or has a small difference between a plurality of CDM groups corresponding to two codewords.

4.  The terminal according to claim 1, wherein
    the combinations are defined per DMRS type or maximum DMRS length.

5.  A radio communication method for a terminal, the radio communication method comprising:

    receiving, when combinations of category-1 demodulation reference signal (DMRS) ports and category-2 DMRS ports in at least one code division multiplexing (CDM) group are supported, downlink control information (DCI) that indicates the combinations and that schedules a shared channel for one or two codewords; and
    controlling, based on the combinations, transmission or reception of the shared channel, wherein
    the combinations further include a combination of category-3 DMRS ports and include an entry indicating at least one of DMRS ports across the CDM groups and DMRS ports corresponding to a plurality of transmission/reception points.

6.  A base station comprising:

a transmitting section that transmits, when combinations of category-1 demodulation reference signal (DMRS) ports and category-2 DMRS ports in at least one code division multiplexing (CDM) group are supported, downlink control information (DCI) that indicates the combinations and that schedules a shared channel for one or two codewords; and

a control section that controls, based on the combinations, transmission or reception of the shared channel, wherein

the combinations further include a combination of category-3 DMRS ports and include an entry indicating at least one of DMRS ports across the CDM groups and DMRS ports corresponding to a plurality of transmission/reception points.

## Parameters for PDSCH DM-RS configuration type 1.

| $p$ | CDM group $\lambda$ | $\Delta$ | $w_f(k')$ | | $w_t(l')$ | |
|---|---|---|---|---|---|---|
| | | | $k'=0$ | $k'=1$ | $l'=0$ | $l'=1$ |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |

## Parameters for PDSCH DM-RS configuration type 2.

| $p$ | CDM group $\lambda$ | $\Delta$ | $w_f(k')$ | | $w_t(l')$ | |
|---|---|---|---|---|---|---|
| | | | $k'=0$ | $k'=1$ | $l'=0$ | $l'=1$ |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

## FIG. 1

## Parameters for PUSCH DM-RS configuration type 1.

| $\widetilde{p}$ | CDM group $\lambda$ | $\Delta$ | $w_f(k')$ | | $w_t(l')$ | |
|---|---|---|---|---|---|---|
| | | | $k'=0$ | $k'=1$ | $l'=0$ | $l'=1$ |
| 0 | 0 | 0 | +1 | +1 | +1 | +1 |
| 1 | 0 | 0 | +1 | -1 | +1 | +1 |
| 2 | 1 | 1 | +1 | +1 | +1 | +1 |
| 3 | 1 | 1 | +1 | -1 | +1 | +1 |
| 4 | 0 | 0 | +1 | +1 | +1 | -1 |
| 5 | 0 | 0 | +1 | -1 | +1 | -1 |
| 6 | 1 | 1 | +1 | +1 | +1 | -1 |
| 7 | 1 | 1 | +1 | -1 | +1 | -1 |

## Parameters for PUSCH DM-RS configuration type 2.

| $\widetilde{p}$ | CDM group $\lambda$ | $\Delta$ | $w_f(k')$ | | $w_t(l')$ | |
|---|---|---|---|---|---|---|
| | | | $k'=0$ | $k'=1$ | $l'=0$ | $l'=1$ |
| 0 | 0 | 0 | +1 | +1 | +1 | +1 |
| 1 | 0 | 0 | +1 | -1 | +1 | +1 |
| 2 | 1 | 2 | +1 | +1 | +1 | +1 |
| 3 | 1 | 2 | +1 | -1 | +1 | +1 |
| 4 | 2 | 4 | +1 | +1 | +1 | +1 |
| 5 | 2 | 4 | +1 | -1 | +1 | +1 |
| 6 | 0 | 0 | +1 | +1 | +1 | -1 |
| 7 | 0 | 0 | +1 | -1 | +1 | -1 |
| 8 | 1 | 2 | +1 | +1 | +1 | -1 |
| 9 | 1 | 2 | +1 | -1 | +1 | -1 |
| 10 | 2 | 4 | +1 | +1 | +1 | -1 |
| 11 | 2 | 4 | +1 | -1 | +1 | -1 |

## FIG. 2

## FIG. 3A

| FD-OCC index | Wf(0) | Wf(1) | Wf(2) | Wf(3) |
|---|---|---|---|---|
| 0 | +1 | +1 | +1 | +1 |
| 1 | +1 | -1 | +1 | -1 |
| 2 | +1 | +1 | -1 | -1 |
| 3 | +1 | -1 | -1 | +1 |

## FIG. 3B

| FD-OCC index | Wf(0) | Wf(1) | Wf(2) | Wf(3) |
|---|---|---|---|---|
| 0 | +1 | +1 | +1 | +1 |
| 1 | +1 | -1 | +1 | -1 |
| 2 | +1 | +j | -1 | -j |
| 3 | +1 | -j | -1 | +j |

## FIG. 3C

| TD-OCC index | Wt(0) | Wt(1) |
|---|---|---|
| 0 | +1 | +1 |
| 1 | +1 | -1 |

## FIG. 4A

eType1

CDM group#0

| | port#0 | port#1 | port#8 | port#9 |
|---|---|---|---|---|
| TD-OCC#0 | ● | ● | ● | ● |
| TD-OCC#1 | port#4 ● | port#5 ● | port#12 ● | port#13 ● |

CDM group#1

| | port#2 | port#3 | port#10 | port#11 |
|---|---|---|---|---|
| TD-OCC#0 | ● | ● | ● | ● |
| TD-OCC#1 | port#6 ● | port#7 ● | port#14 ● | port#15 ● |

FD-OCC#0  FD-OCC#1  FD-OCC#2  FD-OCC#3  FD-OCC#0  FD-OCC#1  FD-OCC#2  FD-OCC#3

## FIG. 4B

eType2

CDM group#0

| | port#0 | port#1 | port#12 | port#13 |
|---|---|---|---|---|
| TD-OCC#0 | ● | ● | ● | ● |
| TD-OCC#1 | port#6 ● | port#7 ● | port#18 ● | port#19 ● |

CDM group#1

| | port#2 | port#3 | port#14 | port#15 |
|---|---|---|---|---|
| TD-OCC#0 | ● | ● | ● | ● |
| TD-OCC#1 | port#8 ● | port#9 ● | port#20 ● | port#21 ● |

CDM group#2

| | port#4 | port#5 | port#16 | port#17 |
|---|---|---|---|---|
| TD-OCC#0 | ● | ● | ● | ● |
| TD-OCC#1 | port#10 ● | port#11 ● | port#22 ● | port#23 ● |

FD-OCC#0  FD-OCC#1  FD-OCC#2  FD-OCC#3  FD-OCC#0  FD-OCC#1  FD-OCC#2  FD-OCC#3  FD-OCC#0  FD-OCC#1  FD-OCC#2  FD-OCC#3

dmrs-Type=eType1, maxLength=1

| | One Codeword: Codeword 0 enabled, Codeword 1 disabled | | | Two Codewords: Codeword 0 enabled, Codeword 1 enabled | | | |
|---|---|---|---|---|---|---|---|
| Value | Number of DMRS CDM group(s) without data | DMRS port(s) | Notes | Value | Number of DMRS CDM group(s) without data | DMRS port(s) | Notes |
| 0 | [1] | [0] | | [0] | [2] | [0,1,2,3,8] | [Rank 5-8 with one DMRS symbol] |
| 1 | [1] | [1] | | [1] | [2] | [0,1,2,3,8,10] | |
| 2 | [1] | [0,1] | | [2] | [2] | [0,1,2,3,8,9,10] | |
| 3 | 2 | 0 | | [3] | [2] | [0,1,2,3,8,9,10,11] | |
| 4 | 2 | 1 | | | | | |
| 5 | 2 | 2 | Cat. 1 | | | | |
| 6 | 2 | 3 | | | | | |
| 7 | 2 | 0,1 | | | | | |
| 8 | 2 | 2,3 | | | | | |
| 9 | [2] | [0-2] | | | | | |
| 10 | [2] | [0-3] | | | | | |
| 11 | [2] | [0,2] | | | | | |
| 12 | [1] | [8] | | | | | |
| 13 | [1] | [9] | | | | | |
| 14 | [1] | [8,9] | | | | | |
| 15 | 2 | 8 | | | | | |
| 16 | 2 | 9 | | | | | |
| 17 | 2 | 10 | | | | | |
| 18 | 2 | 11 | Cat.2 | | | | |
| 19 | 2 | 8,9 | | | | | |
| 20 | 2 | 10,11 | | | | | |
| 21 | [2] | [8-10] | | | | | |
| 22 | [2] | [8-11] | | | | | |
| 23 | [2] | [8, 10], [9, 11] | | | | | |
| 24 | [1] | [0,1,8] | | | | | |
| 25 | [1] | [0,1,8,9] | | | | | |
| 26 | 2 | 0,1,8 | Cat.3 | | | | |
| 27 | 2 | 0,1,8,9 | | | | | |
| 28 | 2 | 2,3,10 | | | | | |
| 29 | 2 | 2,3,10,11 | | | | | |

FIG. 5

# FIG. 6A

dmrs-Type=eType1, maxLength=1

| Value | One Codeword:<br>Codeword 0 enabled,<br>Codeword 1 disabled | |
| --- | --- | --- |
| | Number of DMRS CDM group(s) without data | DMRS port(s) |
| 12 | 2 | 0,2,3 |

# FIG. 6B

dmrs-Type=eType1, maxLength=1

| Value | One Codeword:<br>Codeword 0 enabled,<br>Codeword 1 disabled | |
| --- | --- | --- |
| | Number of DMRS CDM group(s) without data | DMRS port(s) |
| ... | ... | ... |
| 30 | 2 | 0,2,3 |
| 31 | 2 | 8,10,11 |

# FIG. 6C

dmrs-Type=eType1, maxLength=1

| Value | One Codeword:<br>Codeword 0 enabled,<br>Codeword 1 disabled | | | Value | Two Codewords:<br>Codeword 0 enabled,<br>Codeword 1 enabled | | |
| --- | --- | --- | --- | --- | --- | --- | --- |
| | Number of DMRS CDM group(s) without data | DMRS port(s) | Notes | | Number of DMRS CDM group(s) without data | DMRS port(s) | Notes |
| ... | ... | ... | ... | ... | ... | ... | ... |
| 30 | 2 | 0,2,3 | Cat. 1 | 4 | 2 | 0,1,2,3,10 | Rank 5-8 with one DMRS symbol |
| 31 | 2 | 8,10,11 | Cat.2 | 5 | 2 | 0,1,2,3,8,10,11 | |
| | | | | | | | |
| | | | | | | | |

dmrs-Type=eType1, maxLength=1

| One Codeword: Codeword 0 enabled, Codeword 1 disabled | | | | Two Codewords: Codeword 0 enabled, Codeword 1 enabled | | | |
|---|---|---|---|---|---|---|---|
| Value | Number of DMRS CDM group(s) without data | DMRS port(s) | Notes | Value | Number of DMRS CDM group(s) without data | DMRS port(s) | Notes |
| 0 | 1 | 0 | | 0 | 2 | 0,1,2,3,8 | |
| 1 | 1 | 1 | | 1 | 2 | 0,1,2,3,8,10 | Rank 5-8 with one DMRS symbol |
| 2 | 1 | 0,1 | | 2 | 2 | 0,1,2,3,8,9,10 | |
| 3 | 2 | 0 | | 3 | 2 | 0,1,2,3,8,9,10,11 | |
| 4 | 2 | 1 | | 4 | 2 | 0,1,2,3,10 | |
| 5 | 2 | 2 | Cat. 1 | 5 | 2 | 0,1,2,3,8,10,11 | |
| 6 | 2 | 3 | | | | | |
| 7 | 2 | 0,1 | | | | | |
| 8 | 2 | 2,3 | | | | | |
| 9 | 2 | 0-2 | | | | | |
| 10 | 2 | 0-3 | | | | | |
| 11 | 2 | 0,2 | | | | | |
| 12 | 1 | 8 | | | | | |
| 13 | 1 | 9 | | | | | |
| 14 | 1 | 8,9 | | | | | |
| 15 | 2 | 8 | | | | | |
| 16 | 2 | 9 | | | | | |
| 17 | 2 | 10 | | | | | |
| 18 | 2 | 11 | Cat.2 | | | | |
| 19 | 2 | 8,9 | | | | | |
| 20 | 2 | 10,11 | | | | | |
| 21 | 2 | 8-10 | | | | | |
| 22 | 2 | 8-11 | | | | | |
| 23 | [2] | [8, 10], [9, 11] | | | | | |
| 24 | 1 | 0,1,8 | | | | | |
| 25 | 1 | 0,1,8,9 | | | | | |
| 26 | 2 | 0,1,8 | Cat.3 | | | | |
| 27 | 2 | 0,1,8,9 | | | | | |
| 28 | 2 | 2,3,10 | | | | | |
| 29 | 2 | 2,3,10,11 | | | | | |
| 30 | 2 | 0,2,3 | Cat. 1 | | | | |
| 31 | 2 | 8,10,11 | Cat.2 | | | | |

FIG. 7

dmrs-Type=eType1, maxLength=2

| | One Codeword: Codeword 0 enabled, Codeword 1 disabled | | | | Two Codewords: Codeword 0 enabled, Codeword 1 enabled | | |
|---|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 0 | 1 | 0 | 1 | 0 | 2 | 0-4 | 2 |
| 1 | 1 | 1 | 1 | 1 | 2 | 0,1,2,3,4,6 | 2 |
| 2 | 1 | 0,1 | 1 | 2 | 2 | 0,1,2,3,4,5,6 | 2 |
| 3 | 2 | 0 | 1 | 3 | 2 | 0,1,2,3,4,5,6,7 | 2 |
| 4 | 2 | 1 | 1 | 4 | 2 | 0,1,2,3,8 | 1 |
| 5 | 2 | 2 | 1 | 5 | 2 | 0,1,2,3,8,10 | 1 |
| 6 | 2 | 3 | 1 | 6 | 2 | 0,1,2,3,8,9,10 | 1 |
| 7 | 2 | 0,1 | 1 | 7 | 2 | 0,1,2,3,8,9,10,11 | 1 |
| 8 | 2 | 2,3 | 1 | 8 | 1 | 0,1,4,5,8 | 2 |
| [9 | 2 | 0-2 | 1] | 9 | 1 | 0,1,4,5,8,12 | 2 |
| [10 | 2 | 0-3 | 1] | 10 | 1 | 0,1,4,5,8,9,12 | 2 |
| 11 | 2 | 0,2 | 1 | 11 | 1 | 0,1,4,5,8,9,12,13 | 2 |
| 12 | 2 | 0 | 2 | 12 | 2 | 0,1,4,5,8 | 2 |
| 13 | 2 | 1 | 2 | 13 | 2 | 0,1,4,5,8,12 | 2 |
| 14 | 2 | 2 | 2 | 14 | 2 | 0,1,4,5,8,9,12 | 2 |
| 15 | 2 | 3 | 2 | 15 | 2 | 0,1,4,5,8,9,12,13 | 2 |
| 16 | 2 | 4 | 2 | 16 | 2 | 2,3,6,7,10 | 2 |
| 17 | 2 | 5 | 2 | 17 | 2 | 2,3,6,7,10,14 | 2 |
| 18 | 2 | 6 | 2 | 18 | 2 | 2,3,6,7,10,11,14 | 2 |
| 19 | 2 | 7 | 2 | 19 | 2 | 2,3,6,7,10,11,14,15 | 2 |
| 20 | 2 | 0,1 | 2 | 20 | 2 | 8-12 | 2 |
| 21 | 2 | 2,3 | 2 | 21 | 2 | 8,9,10,11,12,14 | 2 |
| 22 | 2 | 4,5 | 2 | 22 | 2 | 8-14 | 2 |
| 23 | 2 | 6,7 | 2 | 23 | 2 | 8-15 | 2 |
| 24 | 2 | 0,4 | 2 | | | | |
| 25 | 2 | 2,6 | 2 | | | | |
| [26 | 2 | 0,1,4 | 2] | | | | |
| [27 | 2 | 2,3,6 | 2] | | | | |
| [28 | 2 | 0,1,4,5 | 2] | | | | |
| [29 | 2 | 2,3,6,7 | 2] | | | | |
| [30 | 2 | 0,2,4,6 | 2] | | | | |
| 31 | 1 | 8 | 1 | | | | |
| 32 | 1 | 9 | 1 | | | | |
| 33 | 1 | 8,9 | 1 | | | | |
| 34 | 2 | 8 | 1 | | | | |
| 35 | 2 | 9 | 1 | | | | |
| 36 | 2 | 10 | 1 | | | | |
| 37 | 2 | 11 | 1 | | | | |
| 38 | 2 | 8,9 | 1 | | | | |
| 39 | 2 | 10,11 | 1 | | | | |
| [40 | 2 | 8-10 | 1] | | | | |
| [41 | 2 | 8-11 | 1] | | | | |
| 42 | 2 | 8,10 | 1 | | | | |

FIG. 8

dmrs-Type=eType1, maxLength=2

| | | | | | | | |
|---|---|---|---|---|---|---|---|
| 43 | 2 | 8 | 2 | | | | |
| 44 | 2 | 9 | 2 | | | | |
| 45 | 2 | 10 | 2 | | | | |
| 46 | 2 | 11 | 2 | | | | |
| 47 | 2 | 12 | 2 | | | | |
| 48 | 2 | 13 | 2 | | | | |
| 49 | 2 | 14 | 2 | | | | |
| 50 | 2 | 15 | 2 | | | | |
| 51 | 2 | 8,9 | 2 | | | | |
| 52 | 2 | 10,11 | 2 | | | | |
| 53 | 2 | 12,13 | 2 | | | | |
| 54 | 2 | 14,15 | 2 | | | | |
| 55 | 2 | 8,12 | 2 | | | | |
| 56 | 2 | 10,14 | 2 | | | | |
| [57 | 2 | 8,9,12 | 2] | | | | |
| [58 | 2 | 10,11,14 | 2] | | | | |
| [59 | 2 | 8,9,12,13 | 2] | | | | |
| [60 | 2 | 10,11,14,15 | 2] | | | | |
| [61 | 2 | 8,10,12,14 | 2] | | | | |
| 62 | 1 | 0,1,8 | 1 | | | | |
| 63 | 1 | 0,1,8,9 | 1 | | | | |
| 64 | 2 | 0,1,8 | 1 | | | | |
| 65 | 2 | 0,1,8,9 | 1 | | | | |
| 66 | 2 | 2,3,10 | 1 | | | | |
| 67 | 2 | 2,3,10,11 | 1 | | | | |

# FIG. 9

# FIG. 10A

dmrs-Type=eType1, maxLength=2

| One Codeword: Codeword 0 enabled, Codeword 1 disabled | | | |
|---|---|---|---|
| Value | Number of DMRS CDM group(s) without data | DMRS port(s) | Number of front-load symbols |
| 31 | 2 | 0,2,3 | 1 |

# FIG. 10B

dmrs-Type=eType1, maxLength=2

| One Codeword: Codeword 0 enabled, Codeword 1 disabled | | | |
|---|---|---|---|
| Value | Number of DMRS CDM group(s) without data | DMRS port(s) | Number of front-load symbols |
| ... | ... | ... | ... |
| 68 | 2 | 0,2,3 | 1 |
| 69 | 2 | 8,10,11 | 1 |

dmrs-Type=eType2, maxLength=1

| One codeword: Codeword 0 enabled, Codeword 1 disabled | | | Two codewords: Codeword 0 enabled, Codeword 1 enabled | | |
|---|---|---|---|---|---|
| Value | Number of DMRS CDM group(s) without data | DMRS port(s) | Value | Number of DMRS CDM group(s) without data | DMRS port(s) |
| 0 | 1 | 0 | 0 | 3 | 0-4 |
| 1 | 1 | 1 | 1 | 3 | 0-5 |
| 2 | 1 | 0,1 | 2 | 3 | 12-16 |
| 3 | 2 | 0 | 3 | 3 | 12-17 |
| 4 | 2 | 1 | 4 | 2 | 0,1,2,3,12 |
| 5 | 2 | 2 | 5 | 2 | 0,1,2,3,12,14 |
| 6 | 2 | 3 | 6 | 2 | 0-3,12-14 |
| 7 | 2 | 0,1 | 7 | 2 | 0-3,12-15 |
| 8 | 2 | 2,3 | 8 | 3 | 0,1,2,3,12 |
| 9 | 2 | 0-2 | 9 | 3 | 0,1,2,3,12,14 |
| 10 | 2 | 0-3 | 10 | 3 | 0-3,12-14 |
| 11 | 3 | 0 | 11 | 3 | 0-3,12-15 |
| 12 | 3 | 1 | | | |
| 13 | 3 | 2 | | | |
| 14 | 3 | 3 | | | |
| 15 | 3 | 4 | | | |
| 16 | 3 | 5 | | | |
| 17 | 3 | 0,1 | | | |
| 18 | 3 | 2,3 | | | |
| 19 | 3 | 4,5 | | | |
| 20 | 3 | 0-2 | | | |
| 21 | 3 | 3-5 | | | |
| 22 | 3 | 0-3 | | | |
| 23 | 2 | 0,2 | | | |
| 24 | 1 | 12 | | | |
| 25 | 1 | 13 | | | |
| 26 | 1 | 12,13 | | | |

FIG. 11

dmrs-Type=eType2, maxLength=1

| | | | | | |
|---|---|---|---|---|---|
| 27 | 2 | 12 | | | |
| 28 | 2 | 13 | | | |
| 29 | 2 | 14 | | | |
| 30 | 2 | 15 | | | |
| 31 | 2 | 12,13 | | | |
| 32 | 2 | 14,15 | | | |
| 33 | 2 | 12-14 | | | |
| 34 | 2 | 12-15 | | | |
| 35 | 3 | 12 | | | |
| 36 | 3 | 13 | | | |
| 37 | 3 | 14 | | | |
| 38 | 3 | 15 | | | |
| 39 | 3 | 16 | | | |
| 40 | 3 | 17 | | | |
| 41 | 3 | 12,13 | | | |
| 42 | 3 | 14,15 | | | |
| 43 | 3 | 16,17 | | | |
| 44 | 3 | 12-14 | | | |
| 45 | 3 | 15-17 | | | |
| 46 | 3 | 12-15 | | | |
| 47 | 2 | 12,14 | | | |
| 48 | 1 | 0,1,12 | | | |
| 49 | 1 | 0,1,12,13 | | | |
| 50 | 2 | 0,1,12 | | | |
| 51 | 2 | 0,1,12,13 | | | |
| 52 | 2 | 2,3,14 | | | |
| 53 | 2 | 2,3,14,15 | | | |
| 54 | 3 | 0,1,12 | | | |
| 55 | 3 | 0,1,12,13 | | | |
| 56 | 3 | 2,3,14 | | | |
| 57 | 3 | 2,3,14,15 | | | |
| 58 | 3 | 4,5,16 | | | |
| 59 | 3 | 4,5,16,17 | | | |

# FIG. 12

# FIG. 13A

dmrs-Type=eType2, maxLength=1

| Value | One Codeword: Codeword 0 enabled, Codeword 1 disabled | |
|---|---|---|
| | Number of DMRS CDM group(s) without data | DMRS port(s) |
| 24 | 2 | 0,2,3 |

# FIG. 13B

dmrs-Type=eType2, maxLength=1

| Value | One Codeword: Codeword 0 enabled, Codeword 1 disabled | |
|---|---|---|
| | Number of DMRS CDM group(s) without data | DMRS port(s) |
| ... | ... | ... |
| 60 | 2 | 0,2,3 |
| 61 | 2 | 12,14,15 |

dmrs-Type=eType2, maxLength=2

| | One codeword: Codeword 0 enabled, Codeword 1 disabled | | | | Two Codewords: Codeword 0 enabled, Codeword 1 enabled | | |
|---|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 0 | 1 | 0 | 1 | 0 | 3 | 0-4 | 1 |
| 1 | 1 | 1 | 1 | 1 | 3 | 0-5 | 1 |
| 2 | 1 | 0,1 | 1 | 2 | 2 | 0,1,2,3,6 | 2 |
| 3 | 2 | 0 | 1 | 3 | 2 | 0,1,2,3,6,8 | 2 |
| 4 | 2 | 1 | 1 | 4 | 2 | 0,1,2,3,6,7,8 | 2 |
| 5 | 2 | 2 | 1 | 5 | 2 | 0,1,2,3,6,7,8,9 | 2 |
| 6 | 2 | 3 | 1 | 6 | 2 | 0,1,2,3,12 | 1 |
| 7 | 2 | 0,1 | 1 | 7 | 2 | 0-3,12,14 | 1 |
| 8 | 2 | 2,3 | 1 | 8 | 2 | 0-3,12-14 | 1 |
| 9 | 2 | 0-2 | 1 | 9 | 2 | 0-3,12-15 | 1 |
| 10 | 2 | 0-3 | 1 | 10 | 3 | 0,1,2,3,12 | 1 |
| 11 | 3 | 0 | 1 | 11 | 3 | 0-3,12,14 | 1 |
| 12 | 3 | 1 | 1 | 12 | 3 | 0-3,12-14 | 1 |
| 13 | 3 | 2 | 1 | 13 | 3 | 0-3,12-15 | 1 |
| 14 | 3 | 3 | 1 | 14 | 1 | 0,1,6,7,12 | 2 |
| 15 | 3 | 4 | 1 | 15 | 1 | 0,1,6,7,12,18 | 2 |
| 16 | 3 | 5 | 1 | 16 | 1 | 0,1,6,7,12,13,18 | 2 |
| 17 | 3 | 0,1 | 1 | 17 | 1 | 0,1,6,7,12,13,18,19 | 2 |
| 18 | 3 | 2,3 | 1 | 18 | 2 | 0,1,6,7,12 | 2 |
| 19 | 3 | 4,5 | 1 | 19 | 2 | 0,1,6,7,12,18 | 2 |
| 20 | 3 | 0-2 | 1 | 20 | 2 | 0,1,6,7,12,13,18 | 2 |
| 21 | 3 | 3-5 | 1 | 21 | 2 | 0,1,6,7,12,13,18,19 | 2 |
| 22 | 3 | 0-3 | 1 | 22 | 2 | 2,3,8,9,14 | 2 |
| 23 | 2 | 0,2 | 1 | 23 | 2 | 2,3,8,9,14,20 | 2 |
| 24 | 3 | 0 | 2 | 24 | 2 | 2,3,8,9,14,15,20 | 2 |
| 25 | 3 | 1 | 2 | 25 | 2 | 2,3,8,9,14,15,20,21 | 2 |
| 26 | 3 | 2 | 2 | 26 | 3 | 0,1,6,7,12 | 2 |
| 27 | 3 | 3 | 2 | 27 | 3 | 0,1,6,7,12,18 | 2 |
| 28 | 3 | 4 | 2 | 28 | 3 | 0,1,6,7,12,13,18 | 2 |
| 29 | 3 | 5 | 2 | 29 | 3 | 0,1,6,7,12,13,18,19 | 2 |
| 30 | 3 | 6 | 2 | 30 | 3 | 2,3,8,9,14 | 2 |
| 31 | 3 | 7 | 2 | 31 | 3 | 2,3,8,9,14,20 | 2 |
| 32 | 3 | 8 | 2 | 32 | 3 | 2,3,8,9,14,15,20 | 2 |
| 33 | 3 | 9 | 2 | 33 | 3 | 2,3,8,9,14,15,20,21 | 2 |
| 34 | 3 | 10 | 2 | 34 | 3 | 4,5,10,11,16 | 2 |
| 35 | 3 | 11 | 2 | 35 | 3 | 4,5,10,11,16,22 | 2 |
| 36 | 3 | 0,1 | 2 | 36 | 3 | 4,5,10,11,16,17,22 | 2 |
| 37 | 3 | 2,3 | 2 | 37 | 3 | 4,5,10,11,16,17,22,23 | 2 |
| 38 | 3 | 4,5 | 2 | 38 | 2 | 12-15,18 | 2 |
| 39 | 3 | 6,7 | 2 | 39 | 2 | 12-15,18,20 | 2 |
| 40 | 3 | 8,9 | 2 | 40 | 2 | 12-15,18-20 | 2 |
| 41 | 3 | 10,11 | 2 | 41 | 2 | 12-15,18-21 | 2 |
| 42 | 3 | 0,1,6 | 2 | 42 | 3 | 12-16 | 1 |
| 43 | 3 | 2,3,8 | 2 | 43 | 3 | 12-17 | 1 |

FIG. 14

dmrs-Type=eType2, maxLength=2

| | | | | | | | |
|---|---|---|---|---|---|---|---|
| 44 | 3 | 4,5,10 | 2 | | | | |
| 45 | 3 | 0,1,6,7 | 2 | | | | |
| 46 | 3 | 2,3,8,9 | 2 | | | | |
| 47 | 3 | 4,5,10,11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0,1 | 2 | | | | |
| 53 | 1 | 6,7 | 2 | | | | |
| 54 | 2 | 0,1 | 2 | | | | |
| 55 | 2 | 2,3 | 2 | | | | |
| 56 | 2 | 6,7 | 2 | | | | |
| 57 | 2 | 8,9 | 2 | | | | |
| 58 | 1 | 12 | 1 | | | | |
| 59 | 1 | 13 | 1 | | | | |
| 60 | 1 | 12,13 | 1 | | | | |
| 61 | 2 | 12 | 1 | | | | |
| 62 | 2 | 13 | 1 | | | | |
| 63 | 2 | 14 | 1 | | | | |
| 64 | 2 | 15 | 1 | | | | |
| 65 | 2 | 12,13 | 1 | | | | |
| 66 | 2 | 14,15 | 1 | | | | |
| 67 | 2 | 12-14 | 1 | | | | |
| 68 | 2 | 12-15 | 1 | | | | |
| 69 | 3 | 12 | 1 | | | | |
| 70 | 3 | 13 | 1 | | | | |
| 71 | 3 | 14 | 1 | | | | |
| 72 | 3 | 15 | 1 | | | | |
| 73 | 3 | 16 | 1 | | | | |
| 74 | 3 | 17 | 1 | | | | |
| 75 | 3 | 12,13 | 1 | | | | |
| 76 | 3 | 14,15 | 1 | | | | |
| 77 | 3 | 16,17 | 1 | | | | |
| 78 | 3 | 12-14 | 1 | | | | |
| 79 | 3 | 15-17 | 1 | | | | |
| 80 | 3 | 12-15 | 1 | | | | |
| 81 | 2 | 12,14 | 1 | | | | |

FIG. 15

dmrs-Type=eType2, maxLength=2

| | | | | | | | |
|---|---|---|---|---|---|---|---|
| 82 | 3 | 12 | 2 | | | | |
| 83 | 3 | 13 | 2 | | | | |
| 84 | 3 | 14 | 2 | | | | |
| 85 | 3 | 15 | 2 | | | | |
| 86 | 3 | 16 | 2 | | | | |
| 87 | 3 | 17 | 2 | | | | |
| 88 | 3 | 18 | 2 | | | | |
| 89 | 3 | 19 | 2 | | | | |
| 90 | 3 | 20 | 2 | | | | |
| 91 | 3 | 21 | 2 | | | | |
| 92 | 3 | 22 | 2 | | | | |
| 93 | 3 | 24 | 2 | | | | |
| 94 | 3 | 12,13 | 2 | | | | |
| 95 | 3 | 14,15 | 2 | | | | |
| 96 | 3 | 16,17 | 2 | | | | |
| 97 | 3 | 18,19 | 2 | | | | |
| 98 | 3 | 20,21 | 2 | | | | |
| 99 | 3 | 22,23 | 2 | | | | |
| 100 | 3 | 12,13,18 | 2 | | | | |
| 101 | 3 | 14,15,20 | 2 | | | | |
| 102 | 3 | 16,17,22 | 2 | | | | |
| 103 | 3 | 12,13,18,19 | 2 | | | | |
| 104 | 3 | 14,15,20,21 | 2 | | | | |
| 105 | 3 | 16,17,22,23 | 2 | | | | |
| 106 | 1 | 12 | 2 | | | | |
| 107 | 1 | 13 | 2 | | | | |
| 108 | 1 | 18 | 2 | | | | |
| 109 | 1 | 19 | 2 | | | | |
| 110 | 1 | 12,13 | 2 | | | | |
| 111 | 1 | 18,19 | 2 | | | | |
| 112 | 2 | 12,13 | 2 | | | | |
| 113 | 2 | 14,15 | 2 | | | | |
| 114 | 2 | 18,19 | 2 | | | | |
| 115 | 2 | 20,21 | 2 | | | | |
| 116 | 1 | 0,1,12 | 1 | | | | |
| 117 | 1 | 0,1,12,13 | 1 | | | | |
| 118 | 2 | 0,1,12 | 1 | | | | |
| 119 | 2 | 0,1,12,13 | 1 | | | | |
| 120 | 2 | 2,3,14 | 1 | | | | |
| 121 | 2 | 2,3,14,15 | 1 | | | | |
| 122 | 3 | 0,1,12 | 1 | | | | |
| 123 | 3 | 0,1,12,13 | 1 | | | | |
| 124 | 3 | 2,3,14 | 1 | | | | |
| 125 | 3 | 2,3,14,15 | 1 | | | | |
| 126 | 3 | 4,5,16 | 1 | | | | |
| 127 | 3 | 4,5,16,17 | 1 | | | | |

FIG. 16

# FIG. 17A

dmrs-Type=eType2, maxLength=2

| Value | One Codeword: Codeword 0 enabled, Codeword 1 disabled | | |
| --- | --- | --- | --- |
| Value | Number of DMRS CDM group(s) without data | DMRS port(s) | Number of front-load symbols |
| 58 | 2 | 0,2,3 | 1 |

# FIG. 17B

dmrs-Type=eType2, maxLength=2

| Value | One Codeword: Codeword 0 enabled, Codeword 1 disabled | | |
| --- | --- | --- | --- |
| Value | Number of DMRS CDM group(s) without data | DMRS port(s) | Number of front-load symbols |
| ... | ... | ... | ... |
| 128 | 2 | 0,2,3 | 1 |
| 129 | 2 | 12,14,15 | 1 |

FIG. 18A

CDM group#0

FD-OCC        #0        #1

UE#0    UE#1

EP 4 657 807 A1

FIG. 18B

CDM group#0        CDM group#1        CDM group#2

FD-OCC      #0        #1        #0        #1        #0        #1

UE#0    UE#0    UE#0    UE#1    UE#1    UE#1

FIG. 19A

CDM group#0

FD-OCC　　#0　　#1　　#2　　#3

UE#0　UE#1　UE#2　UE#3

FIG. 19B

CDM group#0

FD-OCC　　#0　　#1　　#2　　#3

UE#0　UE#0　UE#1　UE#1

dmrs-Type=eType1, maxLength=1

| Value | One Codeword: Codeword 0 enabled, Codeword 1 disabled | |
| | Number of DMRS CDM group(s) without data | DMRS port(s) |
|---|---|---|
| … | … | … |
| 9 | 2 | 0-2 |
| 10 | 2 | 0-3 |
| 11 | 2 | 0,2 |
| … | … | … |
| 21 | 2 | 8-10 |
| 22 | 2 | 8-11 |
| … | … | … |
| 30 | 2 | 0,2,3 |
| 31 | 2 | 8,9,10 |

FIG. 20

FIG. 21

FIG. 22

FIG. 23

BASE STATION 10, USER TERMINAL 20

1001

PROCESSOR

1007

1004

COMMUNICATION APPARATUS

1002

MEMORY

1005

INPUT APPARATUS

1003

STORAGE

1006

OUTPUT APPARATUS

FIG. 24

FIG. 25

## INTERNATIONAL SEARCH REPORT

| International application No. |
|---|
| **PCT/JP2023/002312** |

| A. | CLASSIFICATION OF SUBJECT MATTER |
|---|---|

*H04L 27/26*(2006.01)i; *H04B 7/0452*(2017.01)i
FI:  H04L27/26 114; H04B7/0452

According to International Patent Classification (IPC) or to both national classification and IPC

| B. | FIELDS SEARCHED |
|---|---|

Minimum documentation searched (classification system followed by classification symbols)

H04L27/26; H04B7/0452

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | NTT DOCOMO, INC., Discussion on DMRS enhancements [online], 3GPP TSG RAN WG1 #111 R1-2211972, 07 November 2022, pp. 1-24, [retrieved on 06 December 2022], Internet: <URL: https://www.3gpp.org/ftp/tsg_ran/WG1_RL1/TSGR1_111/Docs/R1-2211972.zip> sections 2.3, 2.6 | 1-2, 4-6 |
| A | | 3 |
| X | Moderator (NTT DOCOMO), FL summary on DMRS#3 [online], 3GPP TSG RAN WG1 #111 R1-2212760, 17 November 2022, pp. 1-72, [retrieved on 06 December 2022], Internet: <URL: https://www.3gpp.org/ftp/tsg_ran/WG1_RL1/TSGR1_111/Docs/R1-2212760.zip> pp. 16, 19 | 1-2, 4-6 |
| A | | 3 |

☐ Further documents are listed in the continuation of Box C.    ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 August 2023** | **15 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010